(19) Europäisches Patentamt / European Patent Office / Office européen des brevets

(11) **EP 2 919 969 B1**

(12) **FASCICULE DE BREVET EUROPEEN**

(45) Date de publication et mention
de la délivrance du brevet:
**01.07.2020   Bulletin 2020/27**

(21) Numéro de dépôt: **13801676.1**

(22) Date de dépôt: **18.11.2013**

(51) Int Cl.:
*B29C 70/20* (2006.01)      *B29C 70/44* (2006.01)
*B29C 70/38* (2006.01)      *B29C 70/54* (2006.01)
*B29C 70/56* (2006.01)      *B29B 11/16* (2006.01)
*B32B 7/08* (2019.01)      *B32B 27/12* (2006.01)
*B29C 70/08* (2006.01)

(86) Numéro de dépôt international:
**PCT/FR2013/052760**

(87) Numéro de publication internationale:
**WO 2014/076433 (22.05.2014 Gazette 2014/21)**

(54) **PROCEDE DE DEPOT D'UN MATERIAU INTERMEDIAIRE PERMETTANT D'ASSURER LA COHESION DE CE DERNIER ET MATERIAU INTERMEDIAIRE**

VERFAHREN ZUM AUFBRINGEN EINES ZWISCHENMATERIALS UNTER GEWÄHRLEISTUNG DEREN KOHÄSION UND ZWISCHENMATERIAL

METHOD OF APPLYING AN INTERMEDIATE MATERIAL MAKING IT POSSIBLE TO ENSURE THE COHESION THEREOF AND INTERMEDIATE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **19.11.2012   FR 1260966**

(43) Date de publication de la demande:
**23.09.2015   Bulletin 2015/39**

(73) Titulaire: **Hexcel Reinforcements
01120 Dagneux (FR)**

(72) Inventeurs:
• **BERAUD, Jean-Marc
  F-38140 Rives (FR)**
• **DUCARRE, Jacques
  F-38630 Corbelin (FR)**

(74) Mandataire: **Cabinet Beau de Loménie
  51 avenue Jean Jaurès
  BP 7073
  69301 Lyon Cedex 07 (FR)**

(56) Documents cités:
**WO-A1-2009/156157      US-A1- 2012 015 167**

**Description**

La présente invention concerne le domaine technique des matériaux de renfort, adaptés à la constitution de pièces composites. Plus précisément, des procédés et utilisations permettant d'améliorer la résistance au délaminage de matériaux lors de leur dépose.

La fabrication de pièces ou d'articles composites, c'est-à-dire comprenant, d'une part, un ou plusieurs renforts ou nappes fibreuses et, d'autre part, une matrice (qui est, le plus souvent, principalement de type thermodurcissable et peut inclure un ou plusieurs thermoplastiques) peut, par exemple, être réalisée par un procédé dit "direct" ou "LCM" (de l'anglais « Liquid Composite Moulding »). Un procédé direct est défini par le fait qu'un ou plusieurs renforts fibreux sont mis en œuvre à l'état "sec" (c'est-à-dire sans la matrice finale), la résine ou matrice, étant mise en œuvre séparément, par exemple, par injection dans le moule contenant les renforts fibreux (procédé "RTM", de l'anglais Resin Transfer Moulding), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

Pour les procédés RTM, LRI ou RFI, il faut en général tout d'abord fabriquer une préforme fibreuse ou empilement de la forme de l'article fini désiré, puis imprégner cette préforme ou empilement d'une résine destinée à constituer la matrice. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Pour économiser en carburant, l'industrie aéronautique a remplacé de nombreux matériaux métalliques par des matériaux composites qui sont plus légers.

La résine qui est ultérieurement associée, notamment par injection ou infusion, aux nappes unidirectionnelles de renfort, lors de la réalisation de la pièce, peut être une résine thermodurcissable, par exemple du type époxy. Pour permettre un écoulement correct au travers d'une préforme constituée d'un empilement de différentes couches de fibres de carbone, cette résine est, le plus souvent, très fluide, par exemple d'une viscosité de l'ordre de 50 à 200mPa.s. à la température d'infusion/injection. L'inconvénient majeur de ce type de résine est leur fragilité, après polymérisation/réticulation, ce qui entraîne une faible résistance à l'impact des pièces composites réalisées.

Afin de résoudre ce problème, il a été proposé dans les documents de l'art antérieur d'associer les couches unidirectionnelles de fibres de carbone à des couches intermédiaires polymériques, et notamment à un non-tissé de fibres thermoplastiques. De telles solutions sont notamment décrites dans les demandes de brevet ou les brevets EP 1125728, US 6,828,016, WO 00/58083, WO 2007/015706, WO 2006/121961 et US 6,503,856. L'ajout de cette couche de polymère intermédiaire tel qu'un non-tissé permet d'améliorer les propriétés mécaniques au test de compression après impact (CAI), test utilisé de manière courante pour caractériser la résistance des structures à l'impact.

La demande WO 2009/156157 décrit un dispositif particulier et une méthode pour déposer un matériau en bande sur la surface d'une pièce ou un matériau de support, ledit matériau en bande et/ou la pièce ou le matériau de support pouvant être enduit avec un liant, en particulier un adhésif ou une résine avant et/ou pendant la dépose sur la surface.

La demanderesse a également proposé dans les demandes de brevet antérieures WO 2010/046609 et WO 2010/061114, des matériaux Intermédiaires particuliers comportant une nappe de fibres unidirectionnelles, en particulier de carbone, associée par collage, sur chacune de ses faces à un non-tissé de fibres thermoplastiques (également nommé non-tissé), ainsi que leur procédé d'élaboration. La demande WO 2010/046609, plus précisément, décrit un nouveau matériau intermédiaire, destiné à être associé à une résine thermodurcissable pour la réalisation de pièces composites, constitué d'une nappe unidirectionnelle de fibres de carbone présentant une masse surfacique de 100 à 280 g/m$^2$, associée, sur chacune de ses faces, à un voile de fibres thermoplastiques, lesdits voiles présentant, chacun, une épaisseur de 0,5 à 50 microns, de préférence de 3 à 35 microns, le matériau intermédiaire présentant une épaisseur totale de 80 à 380 microns, de préférence de 90 à 320 microns. Ledit matériau intermédiaire peut présenter un facteur d'ouverture situé dans la gamme allant de 0,1 à 5%, de préférence dans la gamme allant de 1 à 2%, obtenu grâce à des perforations réalisées dans l'épaisseur du matériau, ce qui permet aussi d'augmenter sa perméabilité.

Lors de la mise en œuvre de tels matériaux Intermédiaires, notamment sous la forme de rubans voilés, la demanderesse a constaté que lors de la dépose automatisée d'un ruban voilé, celui-ci est collé au pli précédent par l'association d'une action de pression et de chauffe puis refroidissement, ce dernier pouvant se faire sans action particulière d'apport de frigorie, par voie dite « naturelle ». Le ruban se trouve alors lié au pli précédent par sa face inférieure, et cette liaison mécanique, est sollicitée en cisaillement tout au long de la dépose du ruban. La sollicitation est d'intensité proportionnelle au rapport (tension de dépose) / (longueur collée). La tension de dépose étant généralement considérée constante, il en résulte que la contrainte de cisaillement est plus importante lors des premiers centimètres de dépose et que celle-ci va décroître avec la longueur du ruban déposé. L'effort de cisaillement se distribue sur toute l'épaisseur du ruban et, si la tension de dépose est trop importante, un délaminage du ruban au niveau de sa zone centrale qui est constituée de fibres de renfort sèches a été constaté dans certains cas par la demanderesse, lors des premiers centimètres de dépose. En effet, la demanderesse a constaté que dans de tels matériaux comprenant un ruban de fibres unidirectionnelles associé sur au moins l'une de ses faces à une couche de matière thermoplastique et/ou thermodurdssable, une liaison mécanique préférentielle s'établit entre les filaments situés sur leurs faces principales du ruban et la matière thermoplastique et/ou thermodurcissable, alors que la zone centrale du ruban uniquement constituée de filaments correspond à la zone de plus faible résistance au cisaillement.

Ce phénomène peut également être accentué, dans le cas de matériaux associés sur chacune de leurs faces principales à une couche de matière thermoplastique et/ou thermodurcissable, lorsqu'un organe de dépose, du type roulette ou rouleau en fonction de la largeur du matériau déposé, est utilisé pour déposer le matériau. Dans ce cas, lors des tous premiers millimètres, voire centimètres, de collage du matériau, la face au contact avec le rouleau ou la roulette a tendance à y adhérer, ce qui peut encore favoriser le délaminage du matériau quand son autre face est ensuite collée à la surface sur laquelle il est déposé et qui peut être un support ou le pli précédent.

Dans ce contexte, l'objectif de invention est de remédier aux problèmes de délaminage que l'on peut constater dans certains cas, lors du dépôt de matériaux intermédiaires constitués d'une couche de fibres de renfort associée sur au moins l'une de ses faces à une couche de matière thermoplastique ou thermodurcissable ou d'un mélange de matières thermoplastique et thermodurcissable, comme par exemple avec les rubans voilés décrits dans les demandes de brevet WO 2010/046609 et WO 2010/061114, mis en œuvre notamment lors de la réalisation d'empilements. Pour cela, la présente invention propose un nouveau procédé de dépose mettant en œuvre une étape préalable et permettant de conserver l'intégrité des matériaux intermédiaires utilisés, lors de leur dépose.

La présente Invention concerne un procédé de dépôt en continu sur une surface de dépose d'un matériau intermédiaire constitué d'une couche unidirectionnelle de fibres de renfort associée sur au moins l'une de ses faces à une couche de matière thermoplastique et/ou thermodurcissable, la ou les couches de matière thermoplastique et/ou thermodurcissable constitutive(s) du matériau intermédiaire ne représentant pas plus de 10% de la masse totale du matériau intermédiaire, et représentant de préférence de 0,5 à 10%, et préférentiellement de 2 à 6%, de la masse totale du matériau intermédiaire, dans lequel :

-   le matériau intermédiaire a subi, préalablement à son dépôt, une opération d'application ponctuelle d'efforts traversants réalisée, de manière à traverser l'épaisseur totale du matériau intermédiaire et étant accompagnée d'un chauffage entraînant la fusion au moins partielle de la matière thermoplastique ou une polymérisation partielle ou complète de la matière thermodurcissable, au niveau des points d'applications des efforts traversants, et entraînant une pénétration de la matière thermoplastique et/ou thermodurcissable et créant des ponts de liaison dans l'épaisseur de la couche unidirectionnelle de fibres de renfort, s'étendant de préférence d'une face principale à l'autre de la couche unidirectionnelle de fibres de renfort,

-   le matériau intermédiaire est déposé en continu, selon une trajectoire de déplacement déterminée, avec application simultanée sur le matériau intermédiaire, d'une tension et d'une pression de manière à l'appliquer sur la surface de dépose, la dépose étant réalisée, en appliquant une face du matériau intermédiaire en cours de dépose correspondant à une couche de matière thermoplastique et/ou thermodurcissable sur la surface de dépose et/ou en appliquant le matériau intermédiaire en cours de dépose sur la surface de dépose porteuse d'une matière thermoplastique et/ou thermodurcissable, et en activant la matière thermoplastique et/ou thermodurcissable qui va se trouver à l'interface entre le matériau intermédiaire et la surface de dépose, de manière à assurer la liaison entre le matériau intermédiaire déposé et la surface de dépose.

Dans le cadre de l'invention, le matériau intermédiaire est soumis, avant l'opération de dépose, à une opération d'application ponctuelle d'efforts traversants, de manière à augmenter la cohésion dans l'épaisseur du matériau intermédiaire. Ensuite, lors de sa dépose, l'intégrité du matériau intermédiaire est mieux conservée, malgré les contraintes en cisaillement qu'il subit.

L'invention concerne également un procédé de constitution d'un empilement par dépôts successifs de matériaux intermédiaires constitués d'une couche unidirectionnelle de fibres de renfort associée sur au moins l'une de ses faces à une couche de matière thermoplastique et/ou thermodurcissable, dans lequel les matériaux intermédiaires sont déposés selon le procédé en continu de l'invention. L'empilement réalisé comporte plusieurs couches unidirectionnelles de fibres de renfort, avec au moins deux couches unidirectionnelles de fibres de renfort s'étendant selon des directions différentes.

L'invention a également pour objet l'utilisation dans un procédé de dépôt en continu selon l'invention d'un matériau intermédiaire ayant préalablement subi une opération d'application ponctuelle d'efforts traversants, pour conserver la cohésion du matériau lors de sa dépose, et en particulier lors des premiers centimètres de dépose.

L'invention a également pour objet un procédé de fabrication d'une pièce composite comprenant une étape de constitution selon le procédé défini dans le cadre de l'invention d'un empilement par dépôts successifs de matériaux intermédiaires, lesdits matériaux intermédiaires étant chacun constitué d'une couche de fibres de renfort associée sur au moins l'une de ses faces à une couche de matière thermoplastique ou thermodurcissable ou d'un mélange de matières thermoplastique et thermodurcissable, suivie d'une étape de diffusion, par infusion ou injection, d'une résine thermodurcissable, d'une résine thermoplastique ou d'un mélange de telles résines, au sein de l'empilement, suivie d'une étape de consolidation de la pièce souhaitée par une étape de polymérisation/réticulation suivant un cycle défini en température et sous pression, et d'une étape de refroidissement

La présente invention concerne également des matériaux intermédiaires constitués d'une couche unidirectionnelle de fibres de renfort associée sur au moins l'une de ses faces à une couche de matière thermoplastique et/ou thermodurcissable, la ou les couches de matière thermoplastique et/ou thermodurcissable constitutive(s) du matériau intermédiaire ne représentant pas plus de 10% de la masse totale du matériau intermédiaire et représentant, de préférence de 0,5 à 10%, et préférentiellement de 2 à 6%, de la masse totale du matériau intermédiaire, ayant subi une opération d'application ponctuelle d'efforts traversants réalisée, de manière à traverser l'épaisseur totale du matériau intermédiaire et étant accompagnée d'un chauffage entraînant la fusion au moins partielle de la matière thermoplastique ou une polymérisation partielle ou complète de la matière thermodurcissable, au niveau des points d'applications des efforts traversants, et entraînant une pénétration de la matière thermoplastique et/ou thermodurcissable et créant des ponts dans l'épaisseur de la couche unidirectionnelle de fibres de renfort, s'étendant de préférence d'une face principale à l'autre de la couche unidirectionnelle de fibres de renfort. De manière avantageuse, l'opération d'application ponctuelle d'efforts traversants est réalisée selon une densité de points d'application de 40000 à 250000 par $m^2$, et de préférence de 90000 à 110000 par $m^2$ et le matériau intermédiaire obtenu présente un facteur d'ouverture de 0 à 2 %, et de préférence de 0 à 1% et préférentiellement de 0%. En particulier, un tel matériau intermédiaire pourra présenter un facteur d'ouverture de 0 à 2% et, de préférence de 0%, et avoir été obtenu avec une densité de points d'application de 90000 à 110000 par $m^2$.

La description qui va suivre, en référence aux Figures annexées, permet de mieux comprendre l'invention et détaille différentes variantes de mise en œuvre applicables, indifféremment, aux procédés et utilisations faisant l'objet de l'invention.

Les **Figures 1A et 1B** sont des vues schématiques illustrant deux modes de dépôt de matériaux intermédiaires pouvant être utilisés dans le cadre de l'invention.

La **Figure 2** présente schématiquement les forces appliquées sur un matériau intermédiaire au début de sa dépose.

La **Figure 3** est une vue schématique illustrant un autre mode de dépôt de matériaux intermédiaires pouvant être utilisé dans le cadre de l'invention.

Les **Figure 4A** à **4C** sont des vues schématiques illustrant la réalisation successive de dépôts de matériaux intermédiaires se présentant sous la forme de ruban.

La **Figure 5** est une vue schématique d'une série de points d'application au niveau desquels les efforts traversants, pénétrations, ou perforations sont exercés.

La **Figure 6A** est une photographie d'ensemble d'un matériau intermédiaire perforé pouvant être utilisé dans le cadre de l'invention.

La **Figure 6B** est une photographie correspondant à une vue microscopique, donnant une vue détaillée de l'effet d'une perforation du matériau présenté en **Figure 6A.**

La **Figure 6C** est une photographie d'un autre matériau intermédiaire perforé pouvant être utilisé dans le cadre de l'invention ayant des caractéristiques différentes (OF).

La **Figure 6D** est une photographie correspondant à une vue microscopique, donnant une vue détaillée de l'effet d'une perforation du matériau présenté en **Figure 6C.**

La **Figure 6E** montre une micrographie d'une coupe dans l'épaisseur d'un stratifié réalisé à partir du matériau intermédiaire présenté **Figure 6C** avec infusion de résine RTM 6 (de la société Hexcel Corporation) à 60% de taux volumique de fibres.

La **Figure 7** représente schématiquement un dispositif d'application ponctuelle d'efforts traversants.

La **Figure 8** étudie la résistance au délaminage d'un matériau intermédiaire utilisé dans le cadre de l'invention, en fonction de la tension appliquée audit matériau intermédiaire lors d'une opération de perforation.

La **Figure 9** étudie la résistance au délaminage obtenue en fonction de la densité de micro-perforations appliquée au matériau intermédiaire, dans différents cas de grammage de nappes unidirectionnelles de fibres de carbone.

La **Figure 10** présente les résultats de résistance au délaminage obtenus pour différents matériaux intermédiaires en fonction du voile et du grammage de la nappe unidirectionnelle de carbone utilisés.

La **Figure 11** présente les résultats de résistance au délaminage obtenus en fonction du taux massique de voile.

L'invention utilise le dépôt en continu d'un matériau intermédiaire, selon une trajectoire de déplacement déterminée, avec application simultanée sur le matériau intermédiaire, d'une tension et d'une pression de manière à l'appliquer sur la surface de dépose, la dépose étant réalisée, en appliquant une face du matériau intermédiaire en cours de dépose correspondant à une couche de matière thermoplastique et/ou thermodurcissable sur la surface de dépose et/ou en appliquant le matériau intermédiaire en cours de dépose sur la surface de dépose porteuse d'une matière thermoplastique et/ou thermodurcissable et en activant, au niveau de la zone de dépose, l'interface entre le matériau intermédiaire et la surface de dépose, de manière à assurer la liaison entre le matériau intermédiaire déposé et la surface de dépose.

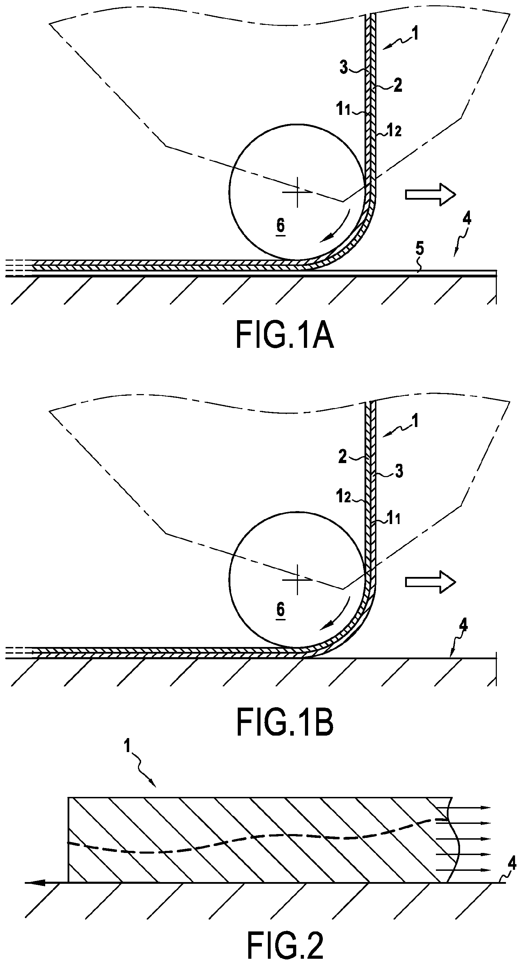

La **Figure 1A** illustre le dépôt d'un matériau intermédiaire **1** constitué d'une couche de fibres unidirectionnelles **2** associée sur une seule de ses faces nommée **1₁** à une couche de matière thermoplastique et/ou thermodurcissable **3**. Le matériau intermédiaire est déposé, de telle sorte que sa face **1₂** qui correspond à la couche de fibres unidirectionnelles **2** soit appliquée contre la surface de dépose **4**. Dans ce cas, la surface de dépose **4** est elle-même constituée d'une couche de matière thermoplastique et/ou thermodurcissable **5** qui est activée et qui assure la liaison avec le matériau intermédiaire. L'activation est assurée par des moyens appropriés non représentés, au fur et à mesure de la dépose du matériau intermédiaire.

Le plus souvent, le matériau intermédiaire est déposé en continu, selon une trajectoire de déplacement déterminée, avec application simultanée sur le matériau intermédiaire, d'une tension et d'une pression de manière à appliquer sur la surface de dépose une face du matériau intermédiaire en cours de dépose correspondant à une couche de matière thermoplastique et/ou thermodurcissable et en activant lors de sa dépose, ladite couche de matière thermoplastique et/ou thermodurcissable, de manière à assurer la liaison entre le matériau intermédiaire déposé et la surface de dépose. Une telle possibilité où le matériau intermédiaire est déposé de manière à appliquer la couche de matière thermoplastique et/ou thermodurcissable **3** contre la surface de dépose **4** est présentée **Figure 1B.**

Quel que soit le cas de figure, l'activation se fait au niveau ou à proximité de la zone de dépose, de manière à rendre collante la couche de matière thermoplastique et/ou thermodurcissable devant assurer la liaison, avant que le contact entre le matériau intermédiaire et la surface de dépose soit réalisé.

De manière classique, dans le cadre de l'invention, la constitution de pièces composites passe par la réalisation d'un empilement ou préforme de matériaux intermédiaires. Chaque matériau intermédiaire comprend une couche de fibres de renfort associée sur au moins l'une de ses faces à une couche de matière thermoplastique ou thermodurcissable ou d'un mélange de matières thermoplastique et thermodurcissable. Afin de constituer l'empilement souhaité, chaque matériau intermédiaire est déposé sur une surface qui peut être, soit un élément support dans le cas du dépôt de la première couche de matériau(x) intermédtaire(s) nécessaire à la réalisation de l'empilement, soit un matériau intermédiaire précédemment déposé. Le dépôt de chaque matériau intermédiaire est, de préférence, réalisé de manière telle qu'au moins une couche de matière thermoplastique ou thermodurcissable ou d'un mélange de matières thermoplastique et thermodurcissable soit appliquée sur la surface de dépôt et soit activée lors de sa dépose, de manière à assurer la liaison avec la surface sur laquelle le matériau intermédiaire est déposé. Une telle dépose facilite le dépôt du premier pli, qui peut être déposé sur n'importe quel type de surface compatible de collage avec la matière polymérique choisie. De plus, on a ainsi, au moins une couche de matière thermoplastique ou thermodurcissable ou d'un mélange de matières thermoplastique et thermodurcissable qui se trouve à l'interface de deux matériaux intermédiaires déposés l'un sur l'autre et assure leur liaison l'un à l'autre.

Dans le cadre de l'invention, le dépôt d'un matériau intermédiaire est réalisé en continu avec application sur ce dernier d'une pression de manière à l'appliquer sur la surface de dépose. La force résultant de cette pression peut, par exemple, être de 0,3 à 8N par cm de largeur de matériau intermédiaire. De manière à assurer un dépôt adéquat, le matériau intermédiaire est tendu au cours de sa dépose. Pour cela, il est tiré parallèlement à la direction des fibres unidirectionnelles. En particulier, une tension de 2 à 50g par cm de largeur de matériau intermédiaire peut, notamment, être appliquée au matériau intermédiaire. Il en résulte que lors des premiers centimètres de dépose, le matériau intermédiaire **1** est soumis à une contrainte en cisaillement du fait qu'il est tiré dans un sens du fait de sa liaison à la surface de dépose **4** et dans le sens opposé du fait de la tension appliquée sur ce dernier, comme représenté schématiquement **Figure 2.**

L'organe de dépôt est, de manière avantageuse, un dispositif tournant du type rouleau, galet ou roulette, en fonction de la largeur du matériau intermédiaire déposé. Cet organe de dépôt est couplé à un dispositif de déplacement et d'avancement du matériau au cours de sa dépose. Le dépôt du matériau intermédiaire peut ainsi être réalisé de manière automatisée grâce à un dispositif de commande.

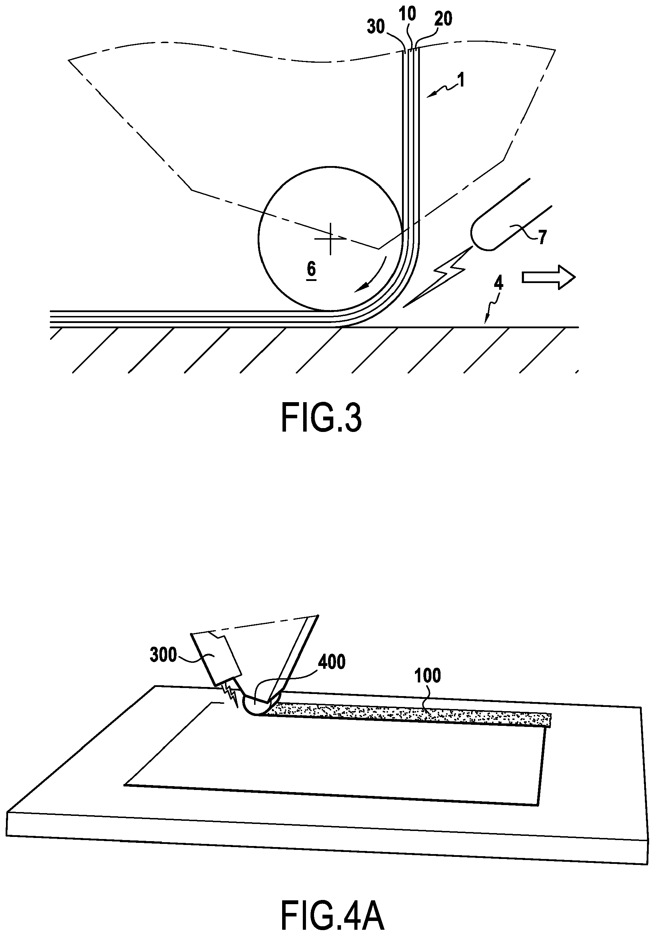

La **Figure 3** illustre un autre mode de réalisation dans lequel le déplacement du matériau intermédiaire **1** est assuré au fur et à mesure de sa dépose en exerçant une pression, de préférence sensiblement perpendiculaire à la surface de dépose **4** sur lequel il est déposé. L'organe de dépose est constitué d'un rouleau **6** qui exerce une pression sur le matériau **1,** de manière à l'appliquer sur la surface de dépose **4**. Le matériau intermédiaire, dans l'exemple illustré **Figure 3** est composé d'une nappe unidirectionnelle **10** associée sur chacune de ses faces à une couche de matière thermoplastique et/ou thermodurcissable **20** et **30**. La manipulation de tels matériaux intermédiaires symétriques est plus aisée, étant donné que dans tous les cas, on a deux couches de matière thermoplastique et/ou thermodurcissable à l'interface, et le matériau peut être déposé sur l'une ou l'autre de ses faces. La couche de matière thermoplastique et/ou thermodurcissable située à l'interface du matériau intermédiaire en cours de dépose et de la surface sur laquelle il est déposé est activée au fur et à mesure de la dépose, par tout moyen approprié, par exemple, par un dispositif de chauffage, notamment, une lampe à infrarouge, une buse à gaz chaud ou un LASER représenté sous la référence **7** sur la **Figure 3,** orienté vers la zone de dépose du matériau intermédiaire. Il a notamment été montré que l'utilisation d'un LASER à Diode de 500W et de longueur d'onde comprise entre 965 nm et 980 nm offrait la possibilité de dépose du matériau intermédiaire à des vitesses de 1m/seconde sur 50mm de large. Une puissance plus importante permet d'augmenter encore cette vitesse ou de déposer une largeur supérieure. L'activation permet de ramollir la couche polymérique à activer en réalisant une fusion au moins partielle dans le cas d'une matière thermoplastique et un début de polymérisation dans le cas d'une matière thermodurcissable.

Après refroidissement, qui peut intervenir naturellement, sans moyen additionnel de frigorie, la liaison du matériau à la surface de dépose est ainsi assurée. La trajectoire de dépose du matériau intermédiaire peut être rectiligne ou courbe. Les fibres unidirectionnelles suivent la trajectoire de dépose.

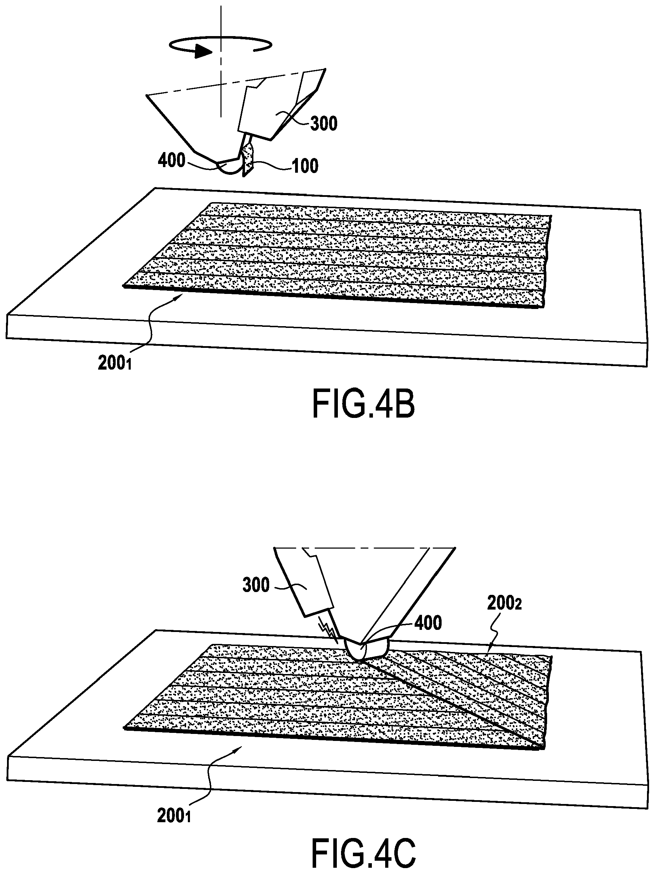

Les **Figures 4A** à **4C** illustrent un mode de réalisation dans lequel différentes bandes **100** de matériaux intermédiaires sont déposées les unes à côté des autres selon des trajectoires de dépose parallèles, de manière à former des couches $200_1$ à $200_n$. Comme Illustré **Figure 4A,** le dispositif **300** permettant d'activer la matière thermoplastique et/ou thermodurcissable est solidaire de l'organe de dépose **400**, de manière à pouvoir se déplacer ensemble. L'organe de dépose **400** est déplacé pour le dépôt des différentes bandes **100** qui sont découpées en fin de trajectoire grâce à un organe de découpe non représenté. Lorsqu'une couche est entièrement déposée, l'orientation de l'organe de dépose est modifiée, comme illustré **Figure 4B,** dans le cas de la première couche $200_1$, de manière à déposer les différentes bandes de matériaux intermédiaires successives devant constituer la couche suivante selon une trajectoire de dépose différente de la couche précédente. La **Figure 4C** représente le dépôt de la deuxième couche $200_2$. Les bandes **100** de matériau intermédiaire constitutives d'une même couche sont déposées de manière adjacente, sans espace interbande, et avec un collage sur 100% de leur surface. Il est ainsi possible de réaliser un matériau dit multi-axial. Le procédé de dépose illustré **Figures 4A** à **4C** est particulièrement adapté au dépôt de matériaux intermédiaires de largeur comprise entre 3 et 300mm et de faible variation en largeur, typiquement ayant un écart type en largeur inférieur à 0,25mm.

Dans le cadre de l'invention, le matériau intermédiaire est préparé, préalablement à son dépôt en continu lors duquel celui-ci est soumis à une certaine pression et à une certaine tension donnant lieu à l'application d'efforts cisaillants, de manière à garantir une meilleure cohésion au matériau intermédiaire malgré les forces de cisaillement exercées sur ce dernier lors de l'opération de dépose. Cette préparation consiste à réaliser sur le matériau intermédiaire, une opération d'application ponctuelle d'efforts traversants, de manière à traverser l'épaisseur totale du matériau intermédiaire. Cette application ponctuelle d'efforts traversants est accompagnée d'un chauffage entraînant la fusion au moins partielle de la matière thermoplastique ou une polymérisation partielle ou complète de la matière thermodurcissable, au niveau des points d'applications des efforts traversants, ce qui entraîne une pénétration de la matière thermoplastique et/ou thermodurcissable et crée des ponts de liaison dans l'épaisseur de la couche unidirectionnelle de fibres de renfort. De préférence, ces ponts de liaisons sont établis entre les deux faces principales de la couche unidirectionnelle de fibres de renfort

L'invention est adaptée au dépôt de matériaux intermédiaires dans lesquels, sur au moins une partie de l'épaisseur de la couche unidirectionnelle, les fibres unidirectionnelles de renfort sont sèches, c'est à dire non imprégnées de matière thermoplastique et/ou thermodurcissable, et donc plus sensibles au délaminage. La ou les couche(s) thermoplastique(s) et/ou thermodurcissable(s) associée(s) à la nappe unidirectionnelle, peut(vent) néanmoins avoir légèrement pénétré dans cette dernière, lors de l'association réalisée en général par thermocompression, mais la partie centrale, dans le cas d'un matériau comportant deux couches de matière thermoplastique et/ou thermodurcissable, ou la partie opposée à la couche de matière thermoplastique et/ou thermodurcissable dans le cas d'un matériau ne comportant qu'une seule couche de matière thermoplastique et/ou thermodurcissable, qui correspond généralement à au moins 50% de l'épaisseur de la couche de fibres unidirectionnelles, reste non imprégnée et est donc qualifiée de sèche. L'opération de pénétration consiste à traverser l'épaisseur totale du matériau intermédiaire, tout en chauffant la matière thermoplastique ou thermodurcissable de manière à ce que cette dernière se trouve ramollie et puisse être entraînée dans la couche de fibres unidirectionnelles, au niveau des points d'application des efforts traversants. Une fois refroidie, la matière thermoplastique et/ou thermodurcissable crée dans l'épaisseur de la couche de fibres unidirectionnelles des ponts de liaison, ce qui permet de renforcer sa cohésion. Après une telle opération, à l'exception des zones bordant les points d'application d'efforts traversants, sur au moins 50% de son épaisseur, la couche de fibres unidirectionnelles est toujours sèche, c'est à dire non imprégnée de matière thermoplastique et/ou thermodurcissable.

Dans le cadre de l'invention, l'opération d'application ponctuelle d'efforts traversants correspond à une opération de pénétration en différents points d'application ou de pénétration. Dans la suite de la description, on nommera indifféremment opération d'application ponctuelle d'efforts traversants ou opération de pénétration en différents points de pénétration, une telle étape consistant à traverser, au moins sur une partie de son épaisseur, un matériau intermédiaire. L'opération d'application ponctuelle d'efforts traversants est, de préférence, réalisée grâce à la pénétration d'une aiguille ou d'une série d'aiguilles, ce qui permet de bien maîtriser l'orientation des efforts traversants. L'opération d'application ponctuelle d'efforts traversants réalisée sur le matériau intermédiaire doit être accompagnée d'un chauffage entraînant la fusion au moins partielle de la matière thermoplastique et/ou le ramollissement de la matière thermodurcissable, au niveau des points d'applications des efforts traversants. Pour cela, on utilisera, par exemple, un organe de pénétration lui-même chauffé. Néanmoins, il pourrait très bien être prévu de réaliser une telle opération grâce à un jet de gaz chaud. Bien que ceci soit non préféré, il pourrait également être envisagé de chauffer la couche de matière thermoplastique et/ou thermodurcissable préalablement à l'opération de pénétration.

De manière avantageuse, l'opération d'application ponctuelle d'efforts traversants est réalisée en appliquant une force de tension sur le matériau intermédiaire. Tout d'abord, une tension suffisante, notamment de 15 à 3000g par cm de largeur sera appliquée sur le matériau intermédiaire, le plus souvent en défilement, lors de l'opération de pénétration, de manière à permettre l'introduction du moyen ou de l'organe de pénétration choisi. De manière avantageuse, la force de tension sur le matériau intermédiaire sera sélectionnée, de manière à entrainer un resserrement au moins partiel des fibres unidirectionnelles après l'opération d'application ponctuelle d'efforts traversants. En particulier, on recherchera à obtenir un facteur d'ouverture le plus faible possible, pour ne pas détériorer les propriétés mécaniques de la pièce obtenue par la suite à partir d'un tel dépôt de matériau intermédiaire. Pour obtenir un facteur d'ouverture le plus faible possible, l'opération de pénétration sera mise en œuvre en appliquant sur le matériau intermédiaire une tension telle que l'ouverture créée par l'organe ou le moyen de pénétration puisse se refermer après le retrait de ce dernier. En particulier, une tension de 300 à 2000g par cm de largeur sera appliquée sur le matériau intermédiaire, pour obtenir un tel resserrement.

Bien entendu, l'organe ou le moyen utilisé pour l'opération de pénétration, est retiré soit après avoir traversé le matériau intermédiaire concerné en effectuant un simple trajet aller, soit en effectuant un trajet aller-retour. Ce retrait sera donc, de préférence, effectué avant refroidissement de la matière thermoplastique et/ou thermodurcissable, afin de permettre le resserrement des fibres. Le temps de refroidissement de la matière thermoplastique et/ou thermodurcissable jusqu'à son point de durcissement sera donc supérieur au temps nécessaire aux fibres pour se resserrer, voire se réaligner totalement, sous la forte tension qui leur est appliquée.

Le résultat ou le but de cette opération de pénétration est de minimiser les risques de délaminage, qui pourraient se produire lors de la dépose du matériau intermédiaire, conformément à l'étape de dépose précédemment décrite, et notamment lors des premiers centimètres de dépose où il est soumis aux principales forces de cisaillement.

De manière préférentielle, l'opération de pénétration est réalisée selon une direction transversale à la surface du matériau intermédiaire traversé.

Il a été constaté qu'une densité de points de pénétration de 40000 à 250000 par $m^2$, et de préférence de 90000 à 110000 par $m^2$, permettait d'obtenir des résultats en termes de résistance au délaminage particulièrement satisfaisants. L'opération de pénétration peut laisser ou non des perforations dans le matériau intermédiaire traversé. Les ouvertures créées par l'opération de perforation présenteront le plus souvent, dans le plan du matériau intermédiaire traversé, une section circulaire ou plus ou moins allongée, sous la forme d'un œil ou fente. Les perforations résultantes ont, par exemple, une plus grande dimension, mesurée parallèlement à la surface traversée, pouvant aller jusqu'à 10mm et de largeur pouvant aller jusqu'à 300$\mu$m.

De manière avantageuse, l'opération d'application ponctuelle d'efforts traversants conduit à un facteur d'ouverture supérieur ou égal à 0 et inférieur ou égal à 5%, et de préférence de 0 à 2 %, et encore préférentiellement de 0 à 1%, de manière à impacter le moins possible les propriétés mécaniques des pièces composites ultérieurement obtenues. Le facteur d'ouverture peut être défini comme le rapport entre la surface non occupée par la matière et la surface totale observée, dont l'observation peut être faite par le dessus du matériau avec un éclairage par le dessous de ce dernier. Il peut, par exemple, être mesuré selon la méthode décrite dans la demande WO 2011/086266. Le facteur d'ouverture peut être nul et correspondre à un matériau avec un délaminage très amélioré.

Un chauffage sera réalisé au niveau du moyen de pénétration ou autour de ce dernier, de manière à permettre le ramollissement de la matière thermoplastique et/ou thermodurcissable initialement présente qu'en surface du matériau intermédiaire et sa pénétration dans la couche de fibres unidirectionnelles. Une résistance chauffante peut, par exemple, être directement intégrée dans le moyen de pénétration, du type aiguille. Il se produit ainsi une fusion de la matière thermoplastique ou une polymérisation partielle ou complète dans le cas d'une matière thermodurcissable autour du moyen de pénétration, ce qui conduit, après refroidissement, à la création de ponts de liaison entre les fibres de la couche unidirectionnelle. De préférence, le moyen de chauffage est directement intégré au moyen de pénétration, de telle sorte que le moyen de pénétration est lui-même chauffé.

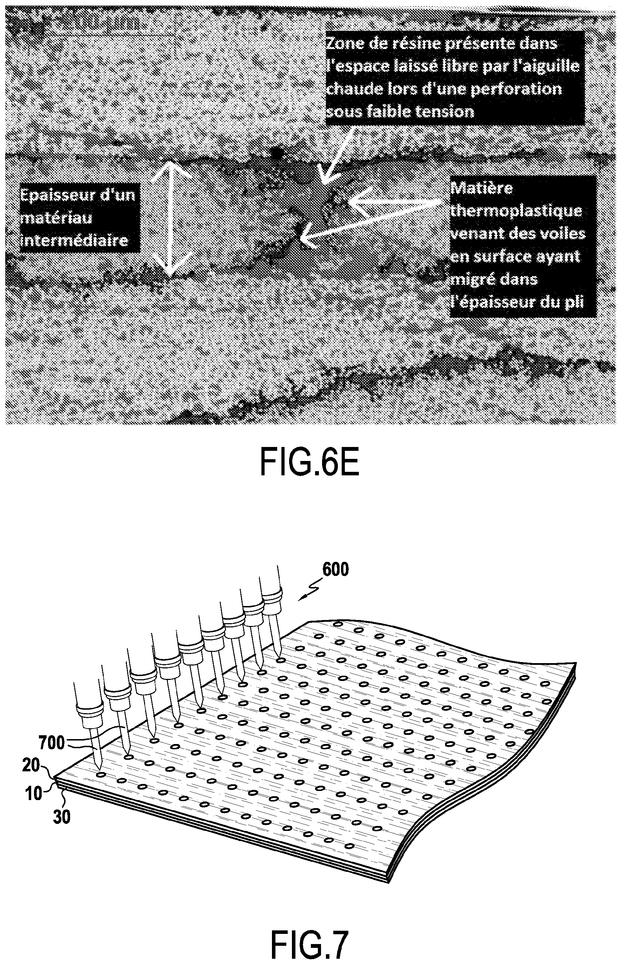

Lors de la pénétration, le matériau intermédiaire pourra venir en butée sur une surface qui pourra alors être chauffée localement autour du moyen de pénétration, afin de réaliser un chauffage localisé autour de ce dernier ou bien, au contraire être totalement isolé, de manière à éviter un ramollissement de la couche de matières thermoplastique ou thermodurcissable ou d'un mélange des deux avec laquelle il sera en contact. La **Figure 7** montre un dispositif de chauffage/pénétration **600** équipé d'un ensemble d'aiguilles **700** alignées conformément aux lignes de pénétration et pas d'espacement sélectionnés.

Les points de pénétration seront, préférentiellement, disposés de manière à former, par exemple un réseau de lignes parallèles, et seront avantageusement, disposés sur deux séries **S1** et **S2** de lignes, de sorte que :

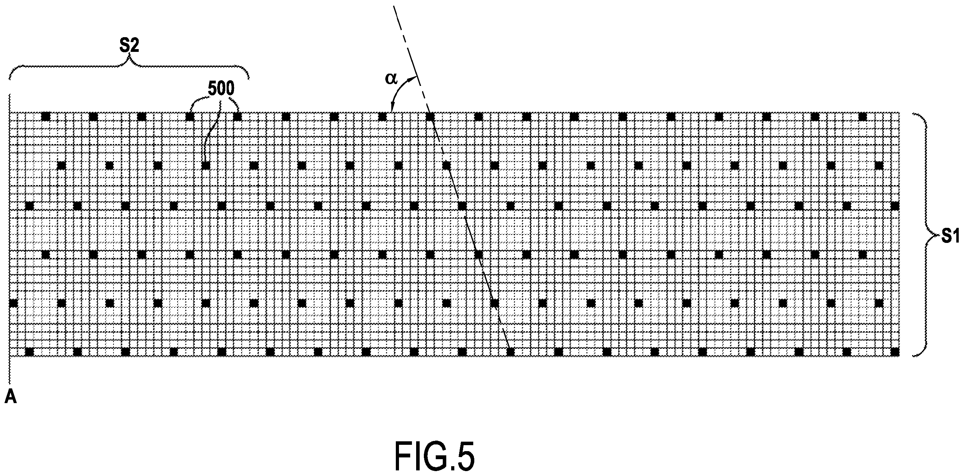

- Dans chaque série **S1** et **S2**, les lignes soient parallèles entre elles,
- Les lignes d'une série **S1** soient perpendiculaires à la direction A des fibres unidirectionnelles de la nappe,
- Les lignes des deux séries **S1** et **S2** soient sécantes et forment, entre elles, un angle $\alpha$ différent de 90°, et notamment, de l'ordre de 50 à 85 ° qui est d'environ 60° dans l'exemple illustré **Figure 5.**

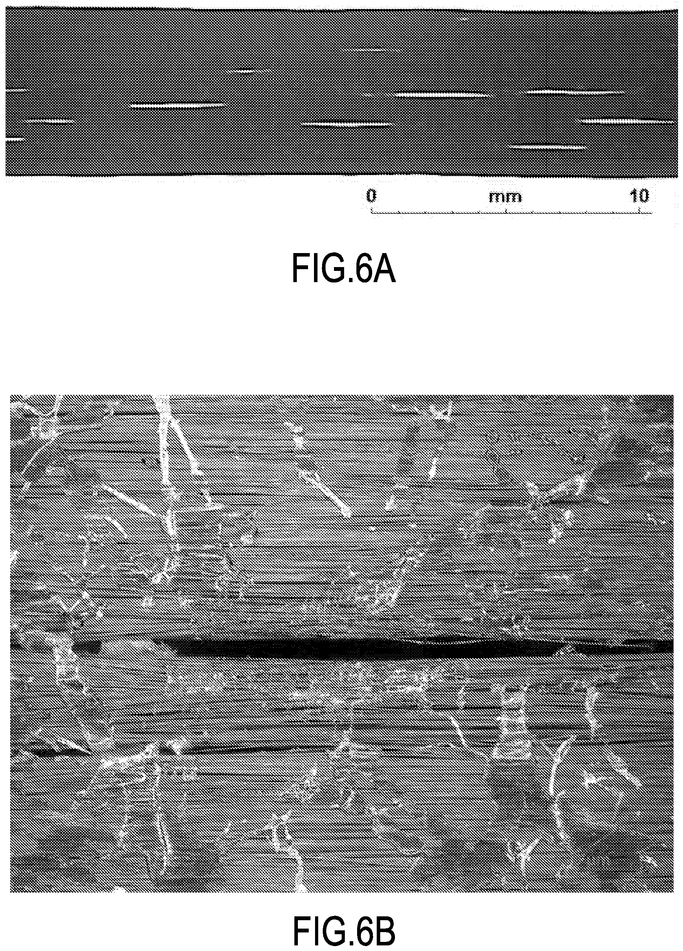

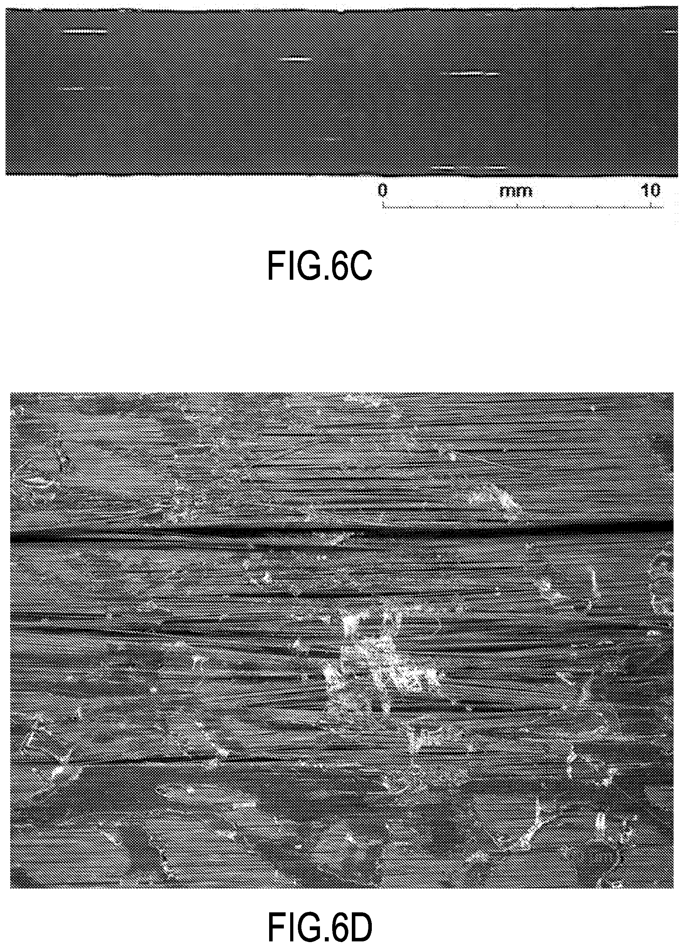

Une telle configuration est illustrée **Figure 5.** Etant donné qu'au niveau des points de pénétration **500,** la pénétration d'un organe tel qu'une aiguille, peut entraîner, non pas la formation d'un trou, mais plutôt d'une fente comme le montre les **Figures 6A et 6C,** du fait que les fibres unidirectionnelles s'écartent les unes des autres au niveau du point de pénétration, on obtient ainsi un décalage des fentes les unes par rapport aux autres. Ceci permet d'éviter la création d'une ouverture trop importante du fait de la réunion de deux fentes trop rapprochées l'une de l'autre.

La **Figure 6A** montre un matériau intermédiaire composé d'une nappe unidirectionnelle de 140g/m$^2$ de fibres de carbone IMA 12K de la société Hexcel Corporation avec un voile 1R8D03 de la société Protechnic (Cernay, France) thermocompressé de chaque côté. Ce matériau intermédiaire présente une largeur de de 6,35mm et un facteur d'ouverture de 1,6% (écart type 0,5%). Il a été produit par pénétration avec une série d'aiguilles chaudes avec une tension de 315g/cm.

La **Figure 6B** montre un grossissement d'une zone perforée du matériau présenté **Figure 6A.**

La **Figure 6C** montre un matériau intermédiaire de 210g/m$^2$ de fibres IMA 12K de la société Hexcel Corporation avec un voile 1R8D06 de la société Protechnic (Cernay, France) thermocompressé de chaque côté, de 6,35mm de large ayant un facteur d'ouverture de 0,5% (écart type 0,3%). Il a été produit par pénétration avec une série d'aiguilles chaudes avec une tension de 315g/cm.

La **Figure 6D** montre un grossissement d'une zone perforée du matériau présenté **Figure 6C.**

La **Figure 6E** montre une micrographie d'une coupe dans l'épaisseur d'un stratifié réalisé à partir du matériau intermédiaire présenté **Figure 6C** avec infusion de résine RTM 6 (de la société Hexcel Corporation) à 60% de taux volumique de fibres. Cette micrographie met en évidence que l'opération de pénétration de l'aiguille chaude à travers le matériau intermédiaire engendre un déplacement du polymère de la surface du matériau intermédiaire au sein de celui-ci, augmentant ainsi sa résistance au délaminage.

Il apparaît que la masse surfadque des fils de renforts et du voile influent sur le facteur d'ouverture obtenu avec une même tension des fils lors de la perforation. La nappe de 210g/m$^2$ a un facteur d'ouverture plus faible que la nappe de 140g/m$^2$, alors même qu'un voile de plus fort grammage a été utilisé. Le phénomène de réarrangement des filaments sous tension se passe plus facilement avec un matériau plus épais. La demande WO 2010/046609 décrit de tels matériaux intermédiaires ayant subi une opération préalable de pénétration/perforation, constitués d'une nappe unidirectionnelle de fibres de carbone, associée sur chacune de ses faces à un non-tissé de fibres thermoplastiques. On pourra se référer à cette demande de brevet pour plus de détails, étant donné, qu'elle décrit de manière détaillée des matériaux intermédiaires pouvant être utilisés dans le cadre de l'invention. Il convient, néanmoins, de souligner que, dans cette demande de brevet, une opération de pénétration ou de perforation était réalisée pour améliorer la perméabilité de l'empilement lors de la réalisation de la pièce composite. Dans le cadre de l'invention, une telle opération est utilisée pour améliorer la cohésion des matériaux intermédiaires au cours de leur dépose qui met en œuvre un dépôt progressif et une liaison progressive du matériau intermédiaire et forme des ponts de liaison entre les fibres unidirectionnelles. Une telle amélioration est mise en évidence dans les exemples qui vont suivre.

Dans le cadre de l'invention, quelle que soit la variante de mise en œuvre, l'opération d'application ponctuelle d'efforts traversants sera réalisée par tout moyen de pénétration approprié, de préférence automatisé, et notamment grâce à une série d'aiguilles, picots ou autre. Le diamètre des aiguilles (dans la partie régulière après la pointe) sera notamment de 0,8 à 2,4mm. Les points d'applications seront, le plus souvent espacés de 5 à 2 mm.

L'opération de pénétration est réalisée sur les matériaux intermédiaires qui sont ensuite déposés, voire empilés pour former un empilement nécessaire à la réalisation d'une pièce composite. Il n'est pas nécessaire que les points de pénétration se superposent ensuite, lors de l'empilement des matériaux intermédiaires. De manière préférée, l'empilement réalisé est exclusivement constitué de matériaux intermédiaires définis dans le cadre de l'invention, ayant subi l'opération de pénétration.

Il est, selon un mode de réalisation privilégié dans le cadre de l'invention, possible de réaliser l'empilement par superposition de matériaux intermédiaires constitués d'un matériau de renfort à base de fibres unidirectionnelles de carbone, associé sur au moins une de ses faces à une couche de matière thermoplastique ou thermodurcissable ou d'un mélange des deux. Un tel matériau intermédiaire pourra être constitué d'une nappe unidirectionnelle de fibres de carbone, associé sur une seule de ses faces, ou sur chacune de ses faces, à une couche de matière thermoplastique ou thermodurcissable ou d'un mélange des deux. De tels matériaux intermédiaires présentent une cohésion propre, la ou les deux couches de matière thermoplastique ou thermodurcissable ou d'un mélange des deux ayant été préalablement associée(s) au matériau de renfort, de préférence grâce au caractère thermoplastique ou thermodurcissable de la couche par thermocompression.

L'empilement réalisé dans le cadre de l'invention pourra comprendre un grand nombre de couches de matériaux intermédiaires, en général, au moins quatre et dans certains cas plus de 100, voire plus de 200. Chaque couche de matériau(x) intermédiaire(s) pourra soit être constitué d'une seule largeur de matériau intermédiaire, soit de dépôts côte à côte, réalisés de manière jointive ou non de matériaux intermédiaires. L'empilement sera, de préférence, constitué uniquement de matériaux intermédiaires définis dans le cadre de l'invention et selon un mode de réalisation avantageux, de matériaux intermédiaires tous identiques.

Les fibres de renfort constitutives des matériaux intermédiaires déposés dans le cadre de l'invention et, donc, utilisés pour la conception des empilements sont, par exemple, des fibres de verre, de carbone, d'aramide, de céramiques, les fibres de carbone étant particulièrement préférées.

De manière classique, dans ce domaine, par « nappe ou couche unidirectionnelle de fibres de renfort », on entend une nappe constituée exclusivement ou quasi-exclusivement de fibres de renfort déposées selon une même direction, de manière à s'étendre de manière sensiblement parallèle les unes aux autres. En particulier, selon un mode de réalisation particulier de l'invention, la nappe unidirectionnelle ne comporte aucun fil de trame venant entrelacer les fibres de renfort, ni même de couture qui aurait pour but de donner une cohésion à la nappe unidirectionnelle avant son association à une couche de matière thermoplastique ou thermodurcissable ou d'un mélange des deux. Ceci permet en particulier d'éviter toute ondulation au sein de la nappe unidirectionnelle.

Dans la nappe unidirectionnelle, les fils de renfort sont, de préférence, non associés à un liant polymérique et donc qualifiés de secs, c'est-à-dire qu'ils ne sont ni imprégnés, ni enduits, ni associés à un quelconque liant polymérique avant leur association aux couches de matière thermoplastique et/ou thermodurcissable. Les fibres de renfort sont, néanmoins, le plus souvent caractérisées par un taux massique d'ensimage standard pouvant représenter au plus 2% de leur masse. Ceci est particulièrement adapté à la réalisation de pièces composites par diffusion de résine, selon les procédés directs bien connus de l'homme de l'art.

Les fibres constitutives des nappes unidirectionnelles sont de préférence continues. La couche ou nappe unidirectionnelle présente dans les matériaux intermédiaires déposés peuvent être constituées de un ou de plusieurs fils. Un fil de carbone est constitué d'un ensemble de filaments et comporte, en général, de 1000 à 80 000 filaments, avantageusement de 12 000 à 24 000 filaments. De façon, particulièrement préférée, dans le cadre de l'invention, des fils de carbone de 1 à 24 K, par exemple, de 3K, 6K, 12K ou 24K, et préférentiellement de 12 et 24K, sont utilisés. Par exemple, les fils de carbone présents au sein des nappes unidirectionnelles, présentent un titre de 60 à 3800 Tex, et préférentiellement de 400 à 900 tex. La nappe unidirectionnelle peut être réalisée avec tout type de fils de carbone, par exemple, des fils Haute Résistance (HR) dont le module en traction est compris entre 220 et 241GPa et dont la contrainte à rupture en traction est comprise entre 3450 et 4830MPa, des fils de Module Intermédiaire (IM) dont le module en traction est compris entre 290 et 297GPa et dont la contrainte à la rupture en traction est comprise entre 3450 et 6200MPa et des Fils Haut Module (HM) dont le module en traction est compris entre 345 et 448GPa et dont la contrainte à rupture en traction est comprise entre 3450 et 5520Pa (d'après le « ASM Handbook », ISBN 0-87170-703-9, ASM International 2001).

Dans le cadre de l'invention, quelle que soit la variante de mise en œuvre du procédé de constitution d'un empilement, l'empilement est, de préférence, constitué de plusieurs matériaux intermédiaires comprenant chacun une couche de fibres de renfort unidirectionnelles, avec au moins deux couches de fibres de renfort unidirectionnelles s'étendant selon des directions différentes. Toutes les couches de fibres de renfort unidirectionnelles peuvent avoir des directions différentes ou seulement certaines d'entre elles. Sinon, hormis leurs différences d'orientation, les couches de fibres de renfort unidirectionnelles présenteront, de préférence, des caractéristiques identiques. Les orientations privilégiées sont le plus souvent, celles faisant un angle de 0°, + 45° ou - 45° (correspondant également à +135°), et + 90° avec l'axe principal de la pièce à réaliser. Le 0° correspond à l'axe de la machine permettant de réaliser l'empilement, c'est-à-dire à l'axe qui correspond à la direction d'avancement de l'empilement lors de sa conception. L'axe principal de la pièce qui est le plus grand axe de la pièce se confond généralement avec le 0°. Il est, par exemple, possible de réaliser des empilements quasi-isotropes, symétriques ou orientés en choisissant l'orientation des plis. A titre d'exemples d'empilement quasi-isotrope, on peut citer l'empilement selon les angles 45°/0°/135°/90°, ou 90°/135°/0°/45°, A titre d'exemples d'empilement symétrique, on peut citer 0°/90°/09², ou 45°/135°/45°. En particulier, des empilements comprenant plus de 4 nappes unidirectionnelles, par exemple de 10 à 300 nappes unidirectionnelles pourront être réalisés. Ces nappes pourront être orientées selon 2, 3, 4, 5, voire plus, directions différentes.

De manière avantageuse, les matériaux intermédiaires utilisés comportent une nappe unidirectionnelle de fibres de carbone présentant un grammage de 100 à 280 g/m².

Dans le cadre de l'invention, quelle que soit la variante de mise en œuvre, la ou les couches de matière thermoplastique et/ou thermodurcissable présentes dans les matériaux intermédiaires utilisés est (sont), de préférence, un non-tissé de fibres thermoplastiques. Bien que ces possibilités soient non préférées, des couches de matière thermoplastique ou thermodurcissable ou d'un mélange des deux du type tissu, film poreux, grille, tricot ou dépôt de poudre pourraient être utilisées. On entend par « couche de matière thermoplastique et/ou thermodurcissable » que ladite couche peut être constituée d'une seule matière thermoplastique ou thermodurcissable, d'un mélange de matières thermoplastiques, d'un mélange de matières thermodurcissables ou d'un mélange de matières thermoplastique(s) et thermodurcissable(s).

Par non-tissé, qui peut également être nommé « voile », on entend classiquement un ensemble de fibres continues ou courtes disposées aléatoirement. Ces non-tissés ou voiles pourront par exemple être produits par les procédés voie sèche (« Drylaid »), vole humide (« Wetlald »), par voie fondue (« Spunlald »), par exemple par extrusion (« Spunbond »), extrusion soufflage («Meltblown»), ou par filage avec solvant («electrospinning», « Flashspining »), bien connus de l'homme du métier. En particulier, les fibres constitutives du non-tissé peuvent présenter des diamètres moyens compris dans la gamme allant de 0,5 à 70 $\mu$m, et préférentiellement de 0,5 à 20 $\mu$m. Les non-tissés peuvent être constitués de fibres courtes ou, de préférence, de fibres continues. Dans le cas d'un non-tissé de fibres courtes, les fibres peuvent présenter, par exemple, une longueur comprise entre 1 et 100 mm. Les non-tissés offrent une couverture aléatoire et, de préférence, isotropique.

De manière avantageuse, chacun des non-tissés présent dans les matériaux intermédiaires utilisés a une masse surfacique comprise dans la gamme allant de 0,2 et 20 g/m$^2$. De façon préférée, chacun des non-tissés présents dans les matériaux intermédiaires utilisés a une épaisseur de 0,5 à 50 microns, de préférence de 3 à 35 microns. Les caractéristiques de ces non-tissés pourront être déterminées selon les méthodes décrites dans la demande WO 2010/046609.

La ou les couches de matière thermoplastique ou thermodurcissable présente(s) dans les matériaux intermédiaires utilisés, et notamment les non-tissés, est (sont), de préférence, en une matière thermoplastique choisie parmi les polyamides, copolyamides, les polyamides - block ether ou ester, les polyphtalamides, les polyesters, les copolyesters, les polyuréthanes thermoplastiques, les polyacétales, les polyoléfines en C2-C8, les polyéthersulfones, les polysulfones, les polyphénylènes sulfones, les polyétheretherCétones, les polyétherCétoneCétone, les poly(sulfure de phénylène), les polyétherimides, les polyimides thermoplastiques, les polymères à cristaux liquides, les phénoxys, les copolymères à blocs tels que les copolymères styrène-butadiene-méthylméthacrylate, les copolymères méthylméthacrylate-acrylate de butyl-méthylméthacrylate et leurs mélanges.

Les autres étapes utilisées pour la fabrication de la pièce composite sont tout à fait classiques pour l'homme du métier. Notamment, la fabrication de la pièce composite met en œuvre, en tant qu'étapes finales, une étape de diffusion, par Infusion ou injection, d'une résine thermodurcissable, d'une résine thermoplastique ou d'un mélange de telles résines, au sein de l'empilement, suivie d'une étape de consolidation de la pièce souhaitée par une étape de polymérisatfon/rétlculation suivant un cycle défini en température et sous pression, et d'une étape d'un refroidissement. Selon un mode de réalisation particulier, adapté par ailleurs à toutes les variantes de mise en œuvre décrites en relation avec l'invention, les étapes de diffusion, consolidation et refroidissement sont mises en œuvre dans un moule ouvert.

En particulier, une résine diffusée au sein de l'empilement sera une résine thermoplastique telle que précédemment listée pour la couche de matière thermoplastique constitutive de l'empilement, ou de préférence une résine thermodurcissable choisie parmi les époxydes, les polyesters Insaturés, les vinylesters, les résines phénoliques, les polyimides, les bismaléimides. les résines phénol-formaldéhydes, urée-formaldéhydes, les l,3,5-triazine-2,4,6-triamines, les benzoxazlnes, les esters de cyanates, et leurs mélanges. Une telle résine pourra également comprendre un ou plusieurs agents durcisseurs, bien connus de l'homme du métier pour être utilisés avec les polymères thermodurcissables sélectionnés.

Dans le cas où la réalisation de la pièce composite utilise la diffusion, par Infusion ou injection, d'une résine thermodurcissable, d'une résine thermoplastique ou d'un mélange de telles résines, au sein de l'empilement qui est l'application majeure envisagée dans le cadre de l'invention, l'empilement réalisé, avant l'ajout de cette résine externe, ne contient pas plus de 10% de matière thermoplastique ou thermodurcissable. En particulier, les couches de matière thermoplastique ou thermodurcissable ou d'un mélange des deux représentent de 0,5 à 10% de la masse totale de l'empilement, et de préférence de 2 à 6% de la masse totale de l'empilement avant l'ajout de cette résine externe. Bien que l'invention soit particulièrement adaptée à la mise en œuvre de procédé directe, elle est également applicable aux procédés indirects mettant en œuvre des matériaux de type préimprégnés.

De manière préférée, dans le cadre de l'invention, l'empilement est effectué de façon automatisée.

L'invention, utilisera de préférence, une infusion dans l'empilement, sous pression réduite, notamment sous une pression inférieure à la pression atmosphérique, notamment inférieure à 1 bar et, de préférence, comprise entre 0,1 et 1 bar, de la résine thermodurcissable ou thermoplastique, ou un mélange de telles résines, pour la réalisation de la pièce composite. L'infusion sera, de préférence, réalisée dans un moule ouvert, par exemple par infusion sous bâche à vide.

La pièce composite est obtenue au final après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement Dans le cas de résine thermodurcissable, on aura le plus souvent une étape de gélification de la résine avant son durcissement. La pression appliquée lors du cycle de traitement est faible dans le cas de l'infusion sous pression réduite et plus forte dans le cas de l'injection dans un moule RTM.

De manière avantageuse, la pièce composite obtenue présente un taux volumique de fibres de 55 à 70% et notamment de 57 à 63%, ce qui conduit à des propriétés satisfaisantes notamment pour le domaine de l'aéronautique. Le taux volumique de fibres (TVF) d'une pièce composite est calculé à partir de la mesure de l'épaisseur d'une pièce composite en connaissant la masse surfacique de la nappe unidirectionnelle de carbone et les propriétés de la fibre de carbone, à partir de l'équation suivante :

$$TVF(\%) = \frac{n_{plis} \times \text{Masse surfacique UD}_{carbone}}{\rho_{\text{fibre carbone}} \times e_{plaque}} \times 10^{-1} \qquad (1)$$

Où $e_{plaque}$ est l'épaisseur de la plaque en mm,
$\rho_{fibre}$ carbone est la densité de la fibre de carbone en g/cm$^3$,
la masse surfacique UD$_{carbone}$ est en g/m$^2$.

Les exemples ci-après permettent d'illustrer l'invention, mais n'ont aucun caractère limitatif.

Description des matériaux de départ:

- Voile de copolyamide d'épaisseur 118$\mu$m et de 6g/m$^2$, commercialisé sous la référence 1R8D06 par la société Protechnic (Cernay, France)
- Voile de copolyamide d'épaisseur 59$\mu$m et de 3g/m$^2$, commercialisé sous la référence 1R8D03 par la société Protechnic (Cernay, France),
- Nappe unidirectionnelle réalisée avec des fils IMA 12K et 446 Tex de la société Hexcel, de manière à obtenir une masse surfacique de 140, 210 ou 280g/m$^2$.

Préparation des matériaux intermédiaires

Un matériau intermédiaire de largeur 6,35mm correspondant à une association voile polyamide/nappe unidirectionnelle de fibres de carbone/voile polyamide est réalisé et lié thermiquement conformément au procédé décrit pages 27 à 30 de la demande WO 2010/046609.

Un dispositif tel qu'illustré **Figure 7** est utilisé pour effectuer une opération de pénétration sur le matériau, avec une disposition des points de pénétration comme présenté **Figure 5**. Dans tous les essais réalisés, les aiguilles sont chauffées à une température de 220°C. Les aiguilles utilisées sont en acier traité avec du carbonitrure de titane. Elles présentent une pointe d'une longueur de 5,25 mm qui présente un diamètre qui augmente jusqu'à atteindre un diamètre de 1,6 mm, pour se finir avec une partie régulière de diamètre contant égal à 1,6 mm sur une longueur de 14 mm.

**Tests des performances**

Protocole de test et modélisation

Eprouvettes :

Les éprouvettes sont réalisées à partir d'un fil de longueur 200mm, en contre-collant un ruban adhésif de 50mm sur ses deux faces opposées. L'effort est exercé par une machine de traction par l'intermédiaire des rubans adhésifs. Un effort en traction de direction parallèle à la longueur de l'éprouvette et de sens opposé est appliqué sur chacune des faces de l'éprouvette. La longueur totale sollicitée s'applique donc sur toute l'éprouvette soit 200 mm.

L'essai est réalisé à vitesse constante jusqu'à décohésion totale de l'éprouvette et la valeur de la plus haute résistance en tension obtenue est récupérée.

Les paramètres suivants ont été fixés pour l'ensemble des essais :

- Longueur de l'éprouvette : 20 cm
- Longueur de collage des rubans adhésifs : 5 cm
- Vitesse de sollicitation : 37,5 m/s

Dans chaque cas, au moins cinq éprouvettes sont testées.

**1. Etude de l'influence de la tension appliquée au matériau intermédiaire lors de la micro-perforation**

L'influence de la tension appliquée au matériau intermédiaire lors de la micro-perforation a été étudiée sur le grammage médian (210 g/m$^2$). Le résultat obtenu peut être extrapolé à toute la gamme des grammages.

Pour faire varier la tension appliquée au matériau intermédiaire, le freinage des bobines placées en amont de la machine de micro-perforations est augmenté.

La tension est contrôlée à l'aide d'un tensiomètre portatif type DTBX 500-10 et 5000-20 en amont de la machine de micro-perforations constituée d'un chariot à aiguilles.

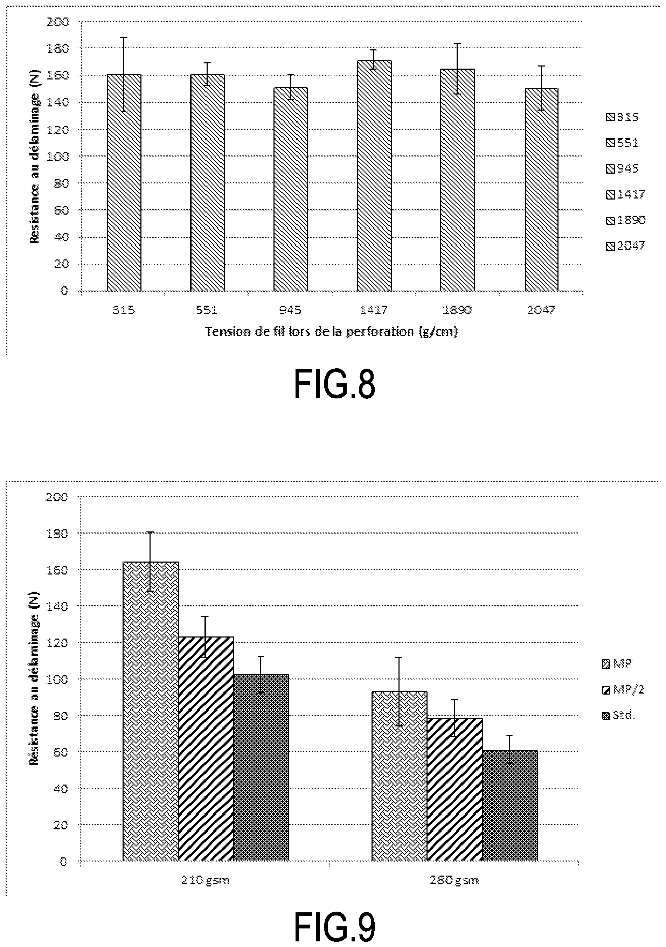

Les résultats obtenus sont présentés **Figure 8** et montrent que la tension appliquée au matériau intermédiaire n'a pas d'influence sur la résistance au délaminage obtenue. Par contre, la tension appliquée a une Influence sur le facteur d'ouverture comme le montrent les résultats présentés **TABLEAU 1.**

**TABLEAU 1**

| OF (%) | Tension (g/cm) |
|--------|----------------|
| 4 | 15 |
| 1 | 315 |
| 0 | 945 |

Il est intéressant de noter que la tension influe linéairement avec le facteur d'ouverture dans le cas d'une échelle des tensions logarithmique.

Les essais présentés aux points 2 à 4 ci-après ont été réalisés avec une tension de 315 g/cm.

**2. Influence de la densité de perforations**

Pour tester l'influence de la densité de micro-perforations, la densité a été divisée par deux. Les essais ont été réalisés pour les deux grammages 210 et 280 g/m$^2$ pour un type de voile (1R8D06 de 6 g/m$^2$).

Les résultats obtenus avec la densité de micro perforations divisée par deux (MP/2 sur la **Figure 9**) sont comparés aux performances obtenues sans (Std sur la **Figure 9**) et avec micro perforations (pleine densité MP sur la **Figure 9** qui correspond à 9,2 trous/cm$^2$) à grammage et type de voile équivalent.

Les résultats sont présentés **Figure 9** et une nette progression de la résistance au délaminage est constatée avec l'augmentation de la densité de perforations.

Il apparait donc clairement que les micro-perforations améliorent la résistance au délaminage et que cette amélioration augmente avec la densité de perforations.

**3. Comparaison des performances obtenues en fonction du grammage de la nappe unidirectionnelle et du voile.**

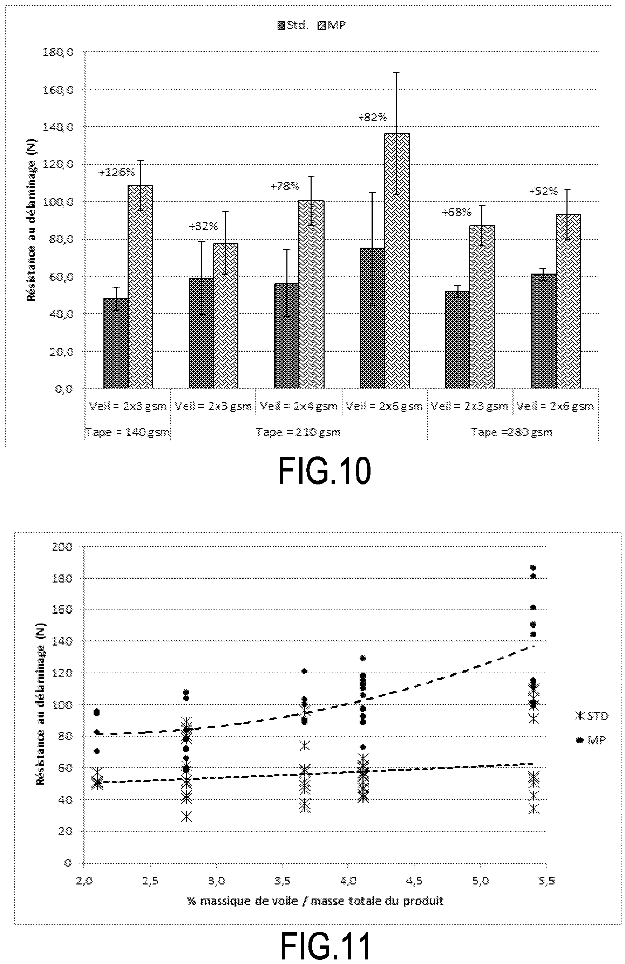

L'ensemble des résultats de résistance au délaminage obtenus en fonction du grammage de l'unidirectionnel et du voile utilisés sont présentés **Figure 10.**

Il apparait que quel que soit le cas étudié, l'utilisation d'un matériau intermédiaire perforé (MP) par rapport à un matériau intermédiaire sans perforations (Std) permet d'améliorer considérablement les résultats et conduit à une meilleure résistance au délaminage.

**4. Influence du pourcentage que représente le voile.**

Le taux de voile est exprimé en % massique, par rapport à la masse de fibres de carbone présentes dans le matériau intermédiaire.

Les résultats obtenus présentés **Figure 11** montrent qu'à iso paramètre d'efforts traversants, la résistance au délaminage croit avec l'augmentation du pourcentage massique de voile.

**5. Influence du facteur d'ouverture obtenu après l'opération de pénétration sur les propriétés mécaniques des stratifiés**

Il a été démontré qu'un stratifié réalisé par injection de résine époxy RTM6 (Hexcel Corporation) d'un matériau intermédiaire conforme au paragraphe 1 ayant subi une application ponctuelle d'efforts traversant combinée à une tension de 15 g/cm et entrainant un facteur d'ouverture de 4% donnait statistiquement une valeur de Compression 0° selon la norme EN2850B environ 7% plus faible que le même stratifié réalisé à partir d'un matériau intermédiaire ayant subi une application ponctuelle d'efforts traversant combinée à une tension de 945 g/cm et entrainant un facteur d'ouverture de 0%. Le stratifié réalisé à partir d'un matériau intermédiaire n'ayant pas subi d'efforts traversant est encore légèrement meilleur mais n'est pas optimisé en terme de délaminage lors de la dépose automatisé. Les résultats sont présentés **TABLEAU 2.**

**TABLEAU 2**

| IMA 12K - 1R8D06 2 faces - 194g/m$^2$-300mm / RTM6 | Compression 0° - EN2850B (Mpa) | |
|---|---|---|
| | Moyenne | Ecart-type |
| Matériau intermédiaire OF 0% **non micro perforé** | 1665 | 100 |
| Matériau intermédiaire OF 0% réalisé à 945cN/cm de tension | 1612 | 102 |
| Matériau intermédiaire OF 4% réalisé à 15cN/cm de tension | 1514 | 93 |

**Revendications**

1. Procédé de dépôt en continu sur une surface de dépose (4) d'un matériau intermédiaire (1, 100) constitué d'une couche unidirectionnelle (2, 10) de fibres de renfort associée sur au moins l'une de ses faces à une couche (3, 20, 30) de matière thermoplastique et/ou thermodurcissable, la ou les couches (3, 20, 30) de matière thermoplastique et/ou thermodurcissable constitutive(s) du matériau intermédiaire (1, 100) ne représentant pas plus de 10% de la masse totale du matériau intermédiaire (1, 100), et représentant de préférence de 0,5 à 10% de la masse totale du matériau intermédiaire (1, 100), et préférentiellement de 2 à 6%, dans lequel :

   - le matériau intermédiaire (1, 100) a subi, préalablement à son dépôt, une opération d'application ponctuelle d'efforts traversants, réalisée, de manière à traverser l'épaisseur totale du matériau intermédiaire (1, 100) et étant accompagnée d'un chauffage conduisant à la fusion au moins partielle de la matière thermoplastique ou une polymérisation partielle ou complète de la matière thermodurcissable, au niveau des points d'applications (500) des efforts traversants, et entraînant une pénétration de la matière thermoplastique et/ou thermodurcissable et créant des ponts de liaison dans l'épaisseur de la couche unidirectionnelle (2, 10) de fibres de renfort, s'étendant de préférence d'une face principale à l'autre de la couche unidirectionnelle (2, 10) de fibres de renfort,
   - le matériau intermédiaire (1, 100) est déposé en continu, selon une trajectoire de déplacement déterminée, avec application simultanée sur le matériau intermédiaire (1, 100), d'une tension et d'une pression de manière à l'appliquer sur la surface de dépose (4), la dépose étant réalisée, en appliquant une face ($1_1$, $1_2$) du matériau intermédiaire (1, 100) en cours de dépose correspondant à une couche (3, 20, 30) de matière thermoplastique et/ou thermodurcissable sur la surface de dépose (4) et/ou en appliquant le matériau intermédiaire (1, 100) en cours de dépose sur la surface de dépose (4) porteuse d'une matière thermoplastique et/ou thermodurcissable et en activant la matière thermoplastique et/ou thermodurcissable qui va se trouver à l'interface entre le matériau intermédiaire (1, 100) et la surface de dépose (4), de manière à assurer la liaison entre le matériau intermédiaire (1, 100) déposé et la surface de dépose (4).

2. Procédé de dépôt selon la revendication 1 **caractérisé en ce que** le matériau intermédiaire (1, 100) est déposé en continu, selon une trajectoire de déplacement déterminée, sous l'action d'une tension et d'une pression de manière à appliquer sur la surface de dépose (4) une face du matériau intermédiaire (1, 100) en cours de dépose correspondant à une couche (3, 20, 30) de matière thermoplastique et/ou thermodurcissable et activer, lors de sa dépose, ladite couche de matière thermoplastique et/ou thermodurcissable, de manière à assurer la liaison entre le matériau intermédiaire (1, 100) déposé et la surface de dépose (4).

3. Procédé de constitution d'un empilement par dépôts successifs de matériaux intermédiaires constitués d'une couche unidirectionnelle (2, 10) de fibres de renfort associée sur au moins l'une de ses faces à une couche (3, 20, 30) de matière thermoplastique et/ou thermodurcissable, dans lequel les matériaux intermédiaires sont déposés en continu selon le procédé de la revendication 1 ou 2.

4. Procédé de constitution d'un empilement selon la revendication 3 **caractérisé en ce que** l'empilement comporte plusieurs couches unidirectionnelles (2, 10) de fibres de renfort, avec au moins deux couches unidirectionnelles (2, 10) de fibres de renfort s'étendant selon des directions différentes.

5. Procédé selon l'une quelconque des revendications 1 à 4 **caractérisé en ce qu'**à l'exception des zones bordant les points d'application (500) d'efforts traversants, sur au moins 50% de son épaisseur, la couche de fibres unidirectionnelles est sèche, c'est-à-dire non imprégnée de matière thermoplastique et/ou thermodurcissable.

6. Procédé selon l'une quelconque des revendications 1 à 5 **caractérisé en ce que** l'opération d'application ponctuelle d'efforts traversants est réalisée en appliquant une force de tension sur le matériau intermédiaire (1, 100), de préférence de 15 à 3000g/cm de largeur de matériau intermédiaire (1, 100).

7. Procédé selon l'une quelconque des revendications 1 à 6 **caractérisé en ce que** la force de tension sur le matériau intermédiaire (1, 100) entraîne un resserrement au moins partiel des fibres unidirectionnelles après l'opération d'application ponctuelle d'efforts traversants, et est de préférence de 300 à 2000 g/cm de largeur de matériau intermédiaire (1, 100).

8. Procédé selon l'une quelconque des revendications 1 à 7 **caractérisé en ce que** la force due à la pression appliquée au matériau intermédiaire (1, 100) est de 0,3 à 8N par cm de largeur de matériau intermédiaire (1, 100).

9. Procédé selon l'une quelconque des revendications 1 à 8 **caractérisé en ce qu'**une tension de 2 à 50 g par cm de largeur de matériau intermédiaire (1, 100) est appliquée au matériau intermédiaire (1, 100).

10. Procédé selon l'une quelconque des revendications 1 à 9 **caractérisé en ce que** la trajectoire de déplacement s'étend parallèlement à la direction des fibres unidirectionnelles.

11. Procédé selon l'une quelconque des revendications 1 à 10 **caractérisé en ce que** l'activation est réalisée par chauffage et est suivie d'un refroidissement.

12. Procédé selon l'une quelconque des revendications 1 à 11 **caractérisé en ce que** l'opération d'application ponctuelle d'efforts traversants est réalisée par pénétration d'une aiguille ou d'une série d'aiguilles.

13. Procédé selon l'une quelconque des revendications 1 à 12 **caractérisé en ce que** l'opération d'application ponctuelle d'efforts traversants est réalisée selon une densité de points d'application (500) de 40000 à 250000 par m$^2$, et de préférence de 90000 à 110000 par m$^2$.

14. Procédé selon l'une quelconque des revendications 1 à 13 **caractérisé en ce que** l'opération d'application ponctuelle d'efforts traversants conduit à un facteur d'ouverture supérieur ou égal à 0 et inférieur ou égal à 5%, de préférence de 0 à 2 %, et préférentiellement de 0 à 1%.

15. Procédé selon l'une quelconque des revendications 1 à 14 **caractérisé en ce que** le matériau intermédiaire (1, 100) est constitué d'une couche de fibres de carbone, associée sur chacune de ses faces à une couche (3, 20, 30) de matière thermoplastique et/ou thermodurcissable.

16. Procédé selon l'une quelconque des revendications 1 à 15 **caractérisé en ce que** la couche unidirectionnelle (2, 10) de fibres de renfort du matériau intermédiaire (1, 100) est une nappe unidirectionnelle de fibres de carbone, ladite nappe unidirectionnelle de fibres de carbone présente un grammage de 100 à 280 g/m$^2$.

17. Procédé selon l'une quelconque des revendications 1 à 16 **caractérisé en ce que** la ou les couches (3, 20, 30) de matière thermoplastique et/ou thermodurcissable constitutive(s) du matériau intermédiaire (1, 100) est en une matière thermoplastique choisie parmi les polyamides, copolyamides, les polyamides - block éther ou ester, les polyphtalamides, les polyesters, les copolyesters, les polyuréthanes thermoplastiques, les polyacétales, les polyoléfines en C2-C8, les polyéthersulfones, les polysulfones, les polyphénylènes sulfones, les polyétherétherCétones, les polyétherCétoneCétone, les poly(sulfure de phénylène), les polyétherimides, les polyimides thermoplastiques, les polymères à cristaux liquides, les phénoxys, les copolymères à blocs tels que les copolymères styrène-butadiene-méthylméthacrylate, les copolymères méthylméthacrylate-acrylate de butyl-méthylméthacrylate et leurs mélanges.

18. Procédé selon l'une quelconque des revendications 1 à 17 **caractérisé en ce que** la ou les couches (3, 20, 30) de matière thermoplastique et/ou thermodurcissable constitutive(s) du matériau intermédiaire (1, 100) est (sont) des non-tissés de fibres thermoplastiques, ledit ou lesdits non-tissés constitutif(s) du matériau intermédiaire (1, 100) a (ont) une masse surfacique comprise dans la gamme allant de 0,2 et 20 g/m$^2$.

19. Procédé selon la revendication 18 **caractérisé en ce que** le ou les non-tissés constitutif(s) du matériau intermédiaire (1, 100) présente(nt) une épaisseur de 0,5 à 50 microns, de préférence de 3 à 35 microns.

20. Matériau intermédiaire (1, 100) constitué d'une couche unidirectionnelle (2, 10) de fibres de renfort associée sur au moins l'une de ses faces à une couche (3, 20, 30) de matière thermoplastique et/ou thermodurcissable, la ou les couches (3, 20, 30) de matière thermoplastique et/ou thermodurcissable constitutive(s) du matériau intermédiaire (1, 100) ne représentant pas plus de 10% de la masse totale du matériau intermédiaire (1, 100), et représentant de préférence de 0,5 à 10% de la masse totale du matériau intermédiaire (1, 100), et préférentiellement de 2 à 6%, **caractérisé en ce qu'**il a subi une opération d'application ponctuelle d'efforts traversants réalisée, de manière à traverser l'épaisseur totale du matériau intermédiaire (1, 100) et étant accompagnée d'un chauffage entraînant la fusion au moins partielle de la matière thermoplastique ou une polymérisation partielle ou complète de la matière thermodurcissable, au niveau des points d'applications des efforts traversants, et entraînant une pénétration de la matière thermoplastique et/ou thermodurcissable et créant des ponts dans l'épaisseur de la couche unidirectionnelle (2, 10) de fibres de renfort, s'étendant de préférence d'une face principale à l'autre de la couche unidirectionnelle (2, 10) de fibres de renfort et **en ce que** l'opération d'application ponctuelle d'efforts traversants est réalisée selon une densité de points d'application (500) de 40000 à 250000 par m$^2$, et de préférence de 90000 à 110000 par m$^2$ et conduit à un facteur d'ouverture de 0%.

21. Matériau intermédiaire (1, 100) selon la revendication 20 **caractérisé en ce qu'**à l'exception des zones bordant les points d'application (500) d'efforts traversants, sur au moins 50% de son épaisseur, la couche de fibres unidirectionnelles est sèche, c'est à dire non imprégnée de matière thermoplastique et/ou thermodurcissable.

22. Matériau intermédiaire (1, 100) selon la revendication 20 ou 21 **caractérisé en ce qu'**il comprend, en outre, au moins une caractéristique du matériau tel que défini à l'une quelconque des revendications 15 à 19.

23. Procédé de fabrication d'une pièce composite comprenant une étape de constitution d'un empilement selon le procédé défini à l'une quelconque des revendications 3 à 19 par dépôts successifs de matériaux intermédiaires, lesdits matériaux intermédiaires étant chacun constitué d'une couche de fibres de renfort associée sur au moins l'une de ses faces à une couche (3, 20, 30) de matière thermoplastique ou thermodurcissable ou d'un mélange de matières thermoplastique et thermodurcissable, suivie d'une étape de diffusion, par infusion ou injection, d'une résine thermodurcissable, d'une résine thermoplastique ou d'un mélange de telles résines, au sein de l'empilement, suivie d'une étape de consolidation de la pièce souhaitée par une étape de polymérisation/réticulation suivant un cycle défini en température et sous pression, et d'une étape de refroidissement.

24. Procédé selon la revendication 23 **caractérisé en ce que** les étapes de diffusion, consolidation et refroidissement sont mises en œuvre dans un moule ouvert.

25. Procédé selon la revendication 23 ou 24 **caractérisé en ce que** la pièce composite obtenue présente un taux volumique de fibres de 55 à 70% et notamment de 57 à 63 %.

26. Procédé selon l'une quelconque des revendications 23 à 25 **caractérisé en ce que** les matériaux intermédiaires sont conformes à l'une quelconque des revendications 20 à 22.

**Patentansprüche**

1. Verfahren zum kontinuierlichen Aufbringen eines Zwischenmaterials (1, 100) auf eine Aufbringungsfläche (4), wobei dieses aus einer unidirektionalen Schicht (2, 10) von Verstärkungsfasern besteht, die auf mindestens einer ihrer Flächen mit einer Schicht (3, 20, 30) aus thermoplastischem und/oder wärmehärtbarem Material verbunden ist, wobei die Schicht(en) (3, 20, 30) aus thermoplastischem und/oder wärmehärtbarem Material, die das Zwischenmaterial (1, 100) bildet (bilden), nicht mehr als 10 % der Gesamtmasse des Zwischenmaterials (1, 100) darstellt (darstellen), und bevorzugt 0,5 bis 10 % der Gesamtmasse des Zwischenmaterials (1, 100), und vorzugsweise 2 bis 6 % darstellt (darstellen), wobei:

- das Zwischenmaterial (1, 100) vor seiner Aufbringung einem Vorgang der punktuellen Ausübung von Durchgangskräften unterzogen wurde, der so ausgeführt wurde, dass er durch die Gesamtdicke des Zwischenmaterials (1, 100) hindurchgeht und von einer Erhitzung begleitet wird, die zu einem zumindest teilweisen Schmelzen des thermoplastischen Materials oder zu einer teilweisen oder vollständigen Polymerisation des wärmehärtbaren Materials führt, und zwar im Bereich der Ausübungspunkte (500) der Durchgangskräfte, und wodurch ein Eindringen des thermoplastischen und/oder wärmehärtbaren Materials bewirkt wird und Verbindungsbrücken in der Dicke der unidirektionalen Schicht (2, 10) aus Verstärkungsfasern erzeugt werden, die sich vorzugsweise von einer Hauptfläche zur anderen der unidirektionalen Schicht (2, 10) aus Verstärkungsfasern erstrecken,

- das Zwischenmaterial (1, 100) kontinuierlich entlang einer bestimmten Bewegungsbahn unter gleichzeitiger Ausübung von Zug und Druck auf das Zwischenmaterial (1, 100) aufgebracht wird, sodass es auf die Aufbringungsfläche (4) aufgetragen wird, wobei die Aufbringung dadurch erfolgt, dass eine Fläche ($1_1$, $1_2$) des Zwischenmaterials (1, 100) während der Aufbringung aufgetragen wird, die einer Schicht (3, 20, 30) aus thermoplastischem und/oder wärmehärtbarem Material auf der Aufbringungsfläche (4) entspricht, und/oder dass das Zwischenmaterial (1, 100) während der Aufbringung auf die Aufbringungsfläche (4) aufgetragen wird, die ein thermoplastisches und/oder wärmehärtbares Material aufweist, und dass das thermoplastische und/oder wärmehärtbare Material, das sich an der Grenzfläche zwischen dem Zwischenmaterial (1, 100) und der Aufbringungsfläche (4) befinden wird, aktiviert wird, um die Verbindung zwischen dem aufgebrachten Zwischenmaterial (1, 100) und der Aufbringungsfläche (4) zu gewährleisten.

2. Verfahren zum Aufbringen nach Anspruch 1, **dadurch gekennzeichnet, dass** das Zwischenmaterial (1, 100) kontinuierlich entlang einer bestimmten Bewegungsbahn unter Einwirkung von Zug und Druck derart aufgebracht wird, dass auf die Aufbringungsfläche (4) eine Fläche des Zwischenmaterials (1, 100) während der Aufbringung aufgetragen wird, die einer Schicht (3, 20, 30) aus thermoplastischem und/oder wärmehärtbarem Material entspricht, und dass diese Schicht aus thermoplastischem und/oder wärmehärtbarem Material während ihrer Aufbringung aktiviert wird, um die Verbindung zwischen dem aufgebrachten Zwischenmaterial (1, 100) und der Aufbringungsfläche (4) zu gewährleisten.

3. Verfahren zum Bilden eines Stapels durch aufeinanderfolgendes Aufbringen von Zwischenmaterialien, die aus einer unidirektionalen Schicht (2, 10) von Verstärkungsfasern bestehen, die auf mindestens einer ihrer Flächen mit einer Schicht (3, 20, 30) aus thermoplastischem und/oder wärmehärtbarem Material verbunden ist, wobei die Zwischenmaterialien kontinuierlich nach dem Verfahren nach Anspruch 1 oder 2 aufgebracht werden.

4. Verfahren zum Bilden eines Stapels nach Anspruch 3, **dadurch gekennzeichnet, dass** der Stapel eine Mehrzahl von unidirektionalen Schichten (2, 10) von Verstärkungsfasern umfasst, wobei sich mindestens zwei unidirektionale Schichten (2, 10) von Verstärkungsfasern in verschiedene Richtungen erstrecken.

5. Verfahren nach einem der Ansprüche 1 bis 4, **dadurch gekennzeichnet, dass** mit Ausnahme der Zonen, die an die Ausübungspunkte (500) von Durchgangskräften angrenzen, die Schicht aus unidirektionalen Fasern auf mindestens 50 % ihrer Dicke trocken, d. h. nicht mit thermoplastischem und/oder wärmehärtbarem Material imprägniert ist.

6. Verfahren nach einem der Ansprüche 1 bis 5, **dadurch gekennzeichnet, dass** der Vorgang der punktuellen Ausübung von Durchgangskräften durchgeführt wird, indem eine Zugkraft auf das Zwischenmaterial (1, 100) ausgeübt wird, vorzugsweise von 15 bis 3000 g/cm der Breite des Zwischenmaterials (1, 100).

7. Verfahren nach einem der Ansprüche 1 bis 6, **dadurch gekennzeichnet, dass** die Zugkraft auf das Zwischenmaterial (1, 100) nach dem Vorgang der punktuellen Ausübung von Durchgangskräften eine zumindest teilweise Straffung der unidirektionalen Fasern bewirkt und vorzugsweise 300 bis 2000 g/cm der Breite des Zwischenmaterials (1, 100) beträgt.

8. Verfahren nach einem der Ansprüche 1 bis 7, **dadurch gekennzeichnet, dass** die durch den auf das Zwischenmaterial (1, 100) ausgeübten Druck verursachte Kraft 0,3 bis 8 N pro cm Breite des Zwischenmaterials (1, 100) beträgt.

9. Verfahren nach einem der Ansprüche 1 bis 8, **dadurch gekennzeichnet, dass** ein Zug von 2 bis 50 g pro cm der Breite des Zwischenmaterials (1, 100) auf das Zwischenmaterial (1, 100) ausgeübt wird.

**10.** Verfahren nach einem der Ansprüche 1 bis 9, **dadurch gekennzeichnet, dass** sich die Bewegungsbahn parallel zur Richtung der unidirektionalen Fasern erstreckt.

**11.** Verfahren nach einem der Ansprüche 1 bis 10, **dadurch gekennzeichnet, dass** die Aktivierung durch Erhitzen erfolgt und ihr eine Kühlung folgt.

**12.** Verfahren nach einem der Ansprüche 1 bis 11, **dadurch gekennzeichnet, dass** der Vorgang der punktuellen Ausübung von Durchgangskräften durch Eindringen einer Nadel oder einer Reihe von Nadeln durchgeführt wird.

**13.** Verfahren nach einem der Ansprüche 1 bis 12, **dadurch gekennzeichnet, dass** der Vorgang der punktuellen Ausübung von Durchgangskräften bei einer Dichte von Ausübungspunkten (500) von 40.000 bis 250.000 pro $m^2$ und vorzugsweise von 90.000 bis 110.000 pro $m^2$ durchgeführt wird.

**14.** Verfahren nach einem der Ansprüche 1 bis 13, **dadurch gekennzeichnet, dass** der Vorgang der punktuellen Ausübung von Durchgangskräften zu einem Öffnungsfaktor führt, der größer oder gleich 0 und kleiner oder gleich 5 % ist, bevorzugt 0 bis 2 % und vorzugsweise 0 bis 1 %.

**15.** Verfahren nach einem der Ansprüche 1 bis 14, **dadurch gekennzeichnet, dass** das Zwischenmaterial (1, 100) aus einer Kohlenstofffaser besteht, die auf jeder ihrer Flächen mit einer Schicht (3, 20, 30) aus thermoplastischem und/oder wärmehärtbarem Material verbunden ist.

**16.** Verfahren nach einem der Ansprüche 1 bis 15, **dadurch gekennzeichnet, dass** die unidirektionale Schicht (2, 10) von Verstärkungsfasern des Zwischenmaterials (1, 100) ein unidirektionales Gewebe aus Kohlenstofffasern ist, wobei das unidirektionale Gewebe aus Kohlenstofffasern ein Flächengewicht von 100 bis 280 $g/m^2$ aufweist.

**17.** Verfahren nach einem der Ansprüche 1 bis 16, **dadurch gekennzeichnet, dass** die Schicht(en) (3, 20, 30) aus thermoplastischem und/oder wärmehärtbarem Material, die das Zwischenmaterial (1, 100) bildet (bilden), aus einem thermoplastischen Material besteht (bestehen), ausgewählt aus Polyamiden, Copolyamiden, Polyamiden - Ether- oder Esterblock, Polyphthalamiden, Polyestern, Copolyestern, thermoplastischen Polyurethanen, Polyacetalen, C2-C8-Polyolefinen, Polyethersulfonen, Polysulfonen, Polyphenylensulfonen, Polyetheretherketonen, Polyetherketonketonen, Poly(phenylensulfid), Polyetherimiden, thermoplastischen Polyimiden, Flüssigkristallpolymeren, Phenoxys, Blockcopolymeren wie StyrolButadien-Methylmethacrylat-Copolymeren, Methylmethacrylat-Butylacrylat-Methylmethacrylat-Copolymeren und Mischungen davon.

**18.** Verfahren nach einem der Ansprüche 1 bis 17, **dadurch gekennzeichnet, dass** es sich bei der oder den Schicht(en) (3, 20, 30) aus thermoplastischem und/oder wärmehärtbarem Material, die das Zwischenmaterial (1, 100) bildet (bilden), um Vliesstoffe aus thermoplastischen Fasern handelt, wobei der oder die Vliesstoff(e), der (die) das Zwischenmaterial (1, 100) bildet (bilden), eine Masse pro Flächeneinheit im Bereich von 0,2 bis 20 $g/m^2$ aufweist (aufweisen).

**19.** Verfahren nach Anspruch 18, **dadurch gekennzeichnet, dass** der oder die Vliesstoff(e), der (die) das Zwischenmaterial (1, 100) bildet (bilden), eine Dicke von 0,5 bis 50 Mikrometer, vorzugsweise 3 bis 35 Mikrometer, aufweist (aufweisen).

**20.** Zwischenmaterial (1, 100), das aus einer unidirektionalen Schicht (2, 10) von Verstärkungsfasern besteht, die auf mindestens einer ihrer Flächen mit einer Schicht (3, 20, 30) aus thermoplastischem und/oder wärmehärtbarem Material verbunden ist, wobei die Schicht(en) (3, 20, 30) aus thermoplastischem und/oder wärmehärtbarem Material, die das Zwischenmaterial (1, 100) bildet (bilden), nicht mehr als 10 % der Gesamtmasse des Zwischenmaterials (1, 100) darstellt (darstellen), und bevorzugt 0,5 bis 10 % der Gesamtmasse des Zwischenmaterials (1, 100), und vorzugsweise 2 bis 6 % darstellt (darstellen), **dadurch gekennzeichnet, dass** es einem Vorgang der punktuellen Ausübung von Durchgangskräften unterzogen wurde, der so ausgeführt wurde, dass er durch die Gesamtdicke des Zwischenmaterials (1, 100) hindurchgeht und von einer Erhitzung begleitet wird, die zu einem zumindest teilweisen Schmelzen des thermoplastischen Materials oder zu einer teilweisen oder vollständigen Polymerisation des wärmehärtbaren Materials führt, und zwar im Bereich der Ausübungspunkte der Durchgangskräfte, und wodurch ein Eindringen des thermoplastischen und/oder wärmehärtbaren Materials bewirkt wird und Brücken in der Dicke der unidirektionalen Schicht (2, 10) aus Verstärkungsfasern erzeugt werden, die sich vorzugsweise von einer Hauptfläche zur anderen der unidirektionalen Schicht (2, 10) aus Verstärkungsfasern erstrecken, und das Eindringen des thermoplastischen und/oder wärmehärtbaren Materials bewirkt und Brücken in der Dicke der unidirektionalen Verstärkungsfaserschicht (2, 10) erzeugt, die sich vorzugsweise von einer Hauptseite der unidirektionalen Verstärkungsfaserschicht (2, 10) zur anderen Seite erstrecken, und dass der Vorgang der punktuellen Ausübung von Durchgangskräften bei einer Dichte von Ausübungspunkten (500) von 40.000 bis 250.000 pro m$^2$ und vorzugsweise von 90.000 bis 110.000 pro m$^2$ durchgeführt wird und zu einem Öffnungsfaktor von 0 % führt.

21. Zwischenmaterial (1, 100) nach Anspruch 20, **dadurch gekennzeichnet, dass** mit Ausnahme der Zonen, die an die Ausübungspunkte (500) von Durchgangskräften angrenzen, die Schicht aus unidirektionalen Fasern auf mindestens 50 % ihrer Dicke trocken, d. h. nicht mit thermoplastischem und/oder wärmehärtbarem Material imprägniert ist.

22. Zwischenmaterial (1, 100) nach Anspruch 20 oder 21, **dadurch gekennzeichnet, dass** es ferner mindestens ein Merkmal des Materials umfasst, wie in einem der Ansprüche 15 bis 19 definiert.

23. Verfahren zur Herstellung eines Verbundteils, umfassend einen Schritt zum Bilden eines Stapels nach dem in einem der Ansprüche 3 bis 19 definierten Verfahren durch aufeinanderfolgendes Aufbringen von Zwischenmaterialien, wobei die Zwischenmaterialien jeweils aus einer Schicht von Verstärkungsfasern bestehen, die auf mindestens einer ihrer Flächen mit einer Schicht (3, 20, 30) aus thermoplastischem oder wärmehärtbarem Material oder einer Mischung aus thermoplastischem und wärmehärtbarem Material verbunden ist, gefolgt von einem Diffusionsschritt durch Infusion oder Injektion eines wärmehärtbaren Harzes, eines thermoplastischen Harzes oder einer Mischung solcher Harze innerhalb des Stapels, gefolgt von einem Schritt der Verfestigung des gewünschten Teils durch einen Schritt der Polymerisation/Vernetzung gemäß einem hinsichtlich der Temperatur definierten Zyklus und unter Druck sowie einem Abkühlungsschritt.

24. Verfahren nach Anspruch 23, **dadurch gekennzeichnet, dass** die Schritte Diffusion, Verfestigung und Abkühlung in einer offenen Form durchgeführt werden.

25. Verfahren nach Anspruch 23 oder 24, **dadurch gekennzeichnet, dass** das erhaltene Verbundteil einen Volumengehalt an Fasern von 55 bis 70 % und insbesondere von 57 bis 63 % aufweist.

26. Verfahren nach einem der Ansprüche 23 bis 25, **gekennzeichnet dadurch, dass** die Zwischenmaterialien einem der Ansprüche 20 bis 22 entsprechen.

## Claims

1. A method for continuously applying on a deposition surface (4) of an intermediate material (1, 100) composed of a unidirectional layer (2, 10) of reinforcing fibers associated on at least one of its faces to a layer (3, 20, 30) of thermoplastic and/or thermosetting material, the layer(s) (3, 20, 30) of thermoplastic and/or thermosetting material forming the intermediate material (1, 100) not representing more than 10% of the total weight of the intermediate material (1, 100), and preferably representing 0.5 to 10%, and more preferably 2 to 6%, of the total weight of the intermediate material (1, 100), wherein:

   - prior to its application, the intermediate material (1, 100) has undergone an operation applying spot traversing forces, performed in such a way as to traverse the total thickness of the intermediate material (1, 100) and accompanied by heating, leading to the at least partial melting of the thermoplastic material or the partial or complete polymerization of the thermosetting material, at the application points (500) of traversing forces, and leading to the penetration of the thermoplastic and/or thermosetting material and creating bonding bridges in the thickness of the unidirectional layer (2, 10) of reinforcing fibers, preferably extending from one main face to the other of the unidirectional layer (2, 10) of reinforcing fibers,
   - the intermediate material (1, 100) is continuously applied, along a given movement trajectory, with simultaneous application on the intermediate material (1, 100) of a tension and a pressure, in such a way as to apply it on the deposition surface (4), the deposition being performed by applying one face ($1_1$, $1_2$) of the intermediate material (1, 100) in the process of being laid up to a layer (3, 20, 30) of thermoplastic and/or thermosetting material on the deposition surface (4) and/or by applying the intermediate material (1, 100) in the process of being laid up on the deposition surface (4) carrying a thermoplastic and/or thermosetting material, and by activating the thermoplastic and/or thermosetting material that will exist at the interface between the intermediate material (1, 100) and the deposition surface (4), in such a way as to ensure the bond between the laid-up intermediate material (1, 100) and the deposition surface (4).

**2.** The application method according to claim 1, **characterized in that** the intermediate material (1, 100) is continuously applied, along a given movement trajectory, under the action of a tension and a pressure in such a way as to apply on the deposition surface (4) a face of the intermediate material (1, 100) in the process of being laid up corresponding to a layer (3, 20, 30) of thermoplastic and/or thermosetting material and to activate, said layer of thermoplastic and/or thermosetting material during its deposition, in such a way as to ensure the bond between the laid-up intermediate material (1, 100) and the deposition surface (4).

**3.** The method for forming a stack by successive applications of intermediate materials composed of a unidirectional layer (2, 10) of reinforcing fibers associated on at least one of its faces to a layer (3, 20, 30) of thermoplastic and/or thermosetting material, wherein the intermediate materials are continuously applied according to the method of claim 1 or 2.

**4.** The method for forming a stack according to claim 3, **characterized in that** the stack includes several unidirectional layers (2, 10) of reinforcing fibers, with at least two unidirectional layers (2, 10) of reinforcing fibers extending in different directions.

**5.** The method according to any one of claims 1 to 4, **characterized in that**, with the exception of the areas bordering the application points (500) of traversing forces, over at least 50% of its thickness, the layer of unidirectional fibers is dry, i.e. unimpregnated with thermoplastic and/or thermosetting material.

**6.** The method according to any one of claims 1 to 5, **characterized in that** the operation of applying spot traversing forces is performed by applying a tensile force to the intermediate material (1, 100), preferably of 15 to 3000g/cm in width of the intermediate material (1, 100).

**7.** The method according to any one of claims 1 to 6, **characterized in that** the tensile force on the intermediate material (1, 100) leads to the at least partial retightening of the unidirectional fibers after the operation of applying spot traversing forces, and is preferably of 300 to 2000 g/cm in width of the intermediate material (1, 100).

**8.** The method according to any one of claims 1 to 7, **characterized in that** the force due to the pressure applied to the intermediate material (1, 100) is of 0.3 to 8N per cm in width of the intermediate material (1, 100).

**9.** The method according to any one of claims 1 to 8, **characterized in that** a tension of 2 to 50 g per cm in width of the intermediate material (1, 100) is applied to the intermediate material (1, 100).

**10.** The method according to any one of claims 1 to 9, **characterized in that** the movement trajectory extends parallel to the direction of the unidirectional fibers.

**11.** The method according to any one of claims 1 to 10, **characterized in that** the activation is carried out by heating and is followed by cooling.

**12.** The method according to any one of claims 1 to 11, **characterized in that** the operation of applying spot traversing forces is performed by penetration of a needle or a series of needles.

**13.** The method according to any one of claims 1 to 12, **characterized in that** the operation of applying spot traversing forces is with a density of application points (500) of 40000 to 250000 per $m^2$, and preferably of 90000 to 110000 per $m^2$.

**14.** The method according to any one of claims 1 to 13, **characterized in that** the operation of applying spot traversing forces leads to an opening factor greater than or equal to 0 and less than or equal to 5%, preferably of 0 to 2 %, and more preferably of 0 to 1%.

**15.** The method according to any one of claims 1 to 14, **characterized in that** the intermediate material (1, 100) is composed of a layer of carbon fibers, associated on each of its faces to a layer (3, 20, 30) of thermoplastic and/or thermosetting material.

**16.** The method according to any one of claims 1 to 15, **characterized in that** the unidirectional layer (2, 10) of reinforcing fibers of the intermediate material (1, 100) is a unidirectional sheet of carbon fibers, the said unidirectional sheet of carbon fibers has a grammage of 100 to 280 $g/m^2$.

17. The method according to any one of claims 1 to 16, **characterized in that** the layer(s) (3, 20, 30) of thermoplastic and/or thermosetting material forming the intermediate material (1, 100) is (are) a thermoplastic material chosen from among the polyamides, the copolyamides, the ether or ester block polyamides, the polyphthalamides, the polyesters, the copolyesters, the thermoplastic polyurethanes, the polyacetals, the C2-C8 polyolefins, the polyethersulfones, the polysulfones, the polyphenylene sulfones, the polyetheretherKetones, the polyetherKetoneKetones, the phenylene polysulphides, the polyetherimides, the thermoplastic polyimides, the liquid crystal polymers, the phenoxys, the block copolymers such as styrene-butadiene-methylmethacrylate copolymers, the methylmethacrylate-acrylate of butyl-methylmethacrylate copolymers and mixtures thereof.

18. The method according to any one of claims 1 to 17, **characterized in that** the layer(s) (3, 20, 30) of thermoplastic and/or thermosetting material forming the intermediate material (1, 100) is (are) non-woven materials made of thermoplastic fibers, the said non-woven materil or materials forming the intermediate material (1, 100) has (have) a basis weight in the range from 0.2 to 20 g/m$^2$.

19. The method according to claim 18, **characterized in that** the non-woven materials forming the intermediate (1, 100) material has (have) a thickness of 0.5 to 50 microns, preferably of 3 to 35 microns.

20. An intermediate material (1, 100) composed of a unidirectional layer (2, 10) of reinforcing fibers associated on at least one of its faces to a layer (3, 20, 30) of thermoplastic and/or thermosetting material, the layer(s) (3, 20, 30) of thermoplastic and/or thermosetting material forming the intermediate material not representing more than 10% of the total weight of the intermediate material (1, 100) and preferably representing 0.5 to 10% of the intermediate material (1, 100), and more preferably 2 to 6%, **characterized in that** it has undergone an operation of applying spot traversing forces, performed in such a way as to traverse the total thickness of the intermediate material (1, 100) and being accompanied by heating leading to the at least partial melting of the thermoplastic material or a partial or complete polymerization of the thermosetting material, at the application spots of traversing forces, and leading to a penetration of the thermoplastic and/or thermosetting material and creating bridges in the thickness of the unidirectional layer (2, 10) of reinforcing fibers, preferably extending from one main face to the other of the unidirectional layer (2, 10) of reinforcing fibers, and **in that** the operation of applying spot traversing forces is performed with a density of application points (500) of 40000 to 250000 per m$^2$, and preferably of 90000 to 110000 per m$^2$ and leads to an opening factor of 0%.

21. The intermediate material (1, 100) according to claim 20, **characterized in that**, with the exception of the areas bordering the application points (500) of traversing forces, over at least 50% of this thickness, the layer of unidirectional fibers is dry, i.e. unimpregnated with thermoplastic and/or thermosetting material.

22. The intermediate material (1, 100) according to claim 20 or 21, **characterized in that** it furthermore comprises at least one of the characteristics of the material as defined in any one of claims 15 to 19.

23. A method for manufacturing a composite part comprising a step of forming a stack using the method defined in any one of claims 3 to 19 by successive applications of intermediate materials, said intermediate materials each being composed of a layer of reinforcing fibers associated on at least one of its faces to a layer (3, 20, 30) of thermoplastic and/or thermosetting material or of a mixture of thermoplastic and thermosetting materials, followed by a step of diffusion, by infusion or injection, of a thermosetting resin, of a thermoplastic resin or a mixture of such resins, inside the stack, followed by a step of hardening of the desired part by a step of polymerization/reticulation following a defined pressure-temperature cycle, and a cooling step.

24. The method according to claim 23, **characterized in that** the diffusion, hardening and cooling steps are implemented in an open mold.

25. The method according to claim 23 or 24, **characterized in that** the composite component obtained has a volume fiber ratio of 55 to 70% and particularly of 57 to 63 %.

26. The method according to any one of claims 23 to 25, **characterized in that** the intermediate materials are in accordance with any one of claims 20 to 22.

FIG.1A

FIG.1B

FIG.2

FIG.3

FIG.4A

FIG.4B

FIG.4C

FIG.5

FIG.6A

FIG.6B

FIG.6C

FIG.6D

Zone de résine présente dans l'espace laissé libre par l'aiguille chaude lors d'une perforation sous faible tension

Epaisseur d'un matériau intermédiaire

Matière thermoplastique venant des voiles en surface ayant migré dans l'épaisseur du pli

FIG.6E

600

700
20
10
30

FIG.7

FIG.8

FIG.9

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1125728 A
- US 6828016 B
- WO 0058083 A
- WO 2007015706 A
- WO 2006121961 A
- US 6503856 B

- WO 2009156157 A
- WO 2010046609 A
- WO 2010061114 A
- WO 2011086266 A

**Littérature non-brevet citée dans la description**

- ASM Handbook. ASM International, 2001